# EUROPEAN PATENT APPLICATION

(11) **EP 4 629 155 A1**
(43) Date of publication of application: **08.10.2025**
(21) Application number: 25163637.9
(22) Date of filing: 13.03.2025
(51) Int. Cl.: G06Q 30/02, G06Q 30/0201, G06Q 50/16

(54) **METHOD FOR PROVIDING REAL ESTATE DEVELOPMENT POSITIONING AND ELECTRONIC DEVICE SUPPORTING THE SAME**

(30) Priority: 03.04.2024 US 202418625999
(71) Applicant: AIBE Inc., Los Angeles California 90025 (US)
(72) Inventor: Song, Steven, Los Angeles, 90025 (US); CHOI, Young Hwan, Los Angeles, 90025 (KR)
(74) Representative: RGTH

(57) **Abstract**

Disclosed is a method for providing real estate development positioning by an electronic device, and the method includes: acquiring data associated with a target area and a task type; classifying at least part of information included in the data into multiple analysis categories having different analysis criteria; based on the at least part of information included in the data and analysis criteria for each of the multiple analysis categories, calculating assessment values of real estate development positioning factors for the target area and the task type within each of the multiple analysis categories; and based on the assessment values of the real estate development positioning factors within each of the multiple analysis categories and preset criteria for an objective architectural task, providing final real estate development positioning for the target area and the task type.

## Description

### BACKGROUND

### Technical Field

The present disclosure relates to a method for providing real estate development positioning by using artificial intelligence (AI) technology, and an electronic device supporting the same.

### Description of Related Technology

With the advancement in Al, various fields are applying AI technology. One example of applied Al technology is machine learning, where computer systems learn and recognize patterns based on data. Another example is deep learning, which utilizes artificial neural networks, multi-layered structures, to learn from large datasets and extract complex patterns. This deep learning, an algorithmic technique for autonomously classifying and learning the features of input data, is widely used in tasks such as image and voice recognition, and natural language processing.

In addition, generative AI is a field of AI that generates new content based on data using machine learning, deep learning, artificial neural networks, natural language processing (NLP), diffusion models, etc. For instance, the generative AI may be used to learn patterns from given training data and generate various forms of new content such as text, images, music, and videos.

Other examples of applied AI technology include: natural language processing (NLP) of performing tasks such as text analysis, sentence generation, machine translation, sentiment analysis, and speech recognition; Neuromorphic Computing; and Statistical Machine Learning. As such, AI technology is widely utilized in various fields. However, applying various AI technologies to real estate development presents challenges in establishing systematic approaches and efficient strategies for optimal real estate development, considering qualitative data processing methodologies and the like.

### SUMMARY

The present disclosure provides a method for providing real estate development positioning by using various data using AI technologies, and an electronic device for supporting the same.

In one general aspect, there is provided a method for providing real estate development positioning by an electronic device, and the method includes: acquiring data associated with a target area and a task type; classifying at least part of the information included in the data into multiple analysis categories having different analysis criteria; based on the at least part of information included in the data and analysis criteria for each of the multiple analysis categories, calculating assessment values of real estate development positioning factors for the target area and the task type within each of the multiple analysis categories; and based on the assessment values of the real estate development positioning factors within each of the multiple analysis categories and preset criteria for an objective architectural task, providing final real estate development positioning for the target area and the task type.

The data associated with the target area and the task type may include: quantitative data comprising at least one of population density data, economic indicators data, traffic statistics data, architectural infrastructure data, and environmental data regarding the target area and the task type; and qualitative data comprising at least one of social networking service (SNS) data, local community feedback data, cultural value data, and quality-of-life data associated with the target area and the task type.

The classifying may include: assigning correlation values to information included in the data associated with the target area and the task type based on a preset correlation measurement function; identifying a piece of information exceeding a preset correlation threshold among the information with the correlation values assigned; and classifying a piece of information exceeding the preset correlation threshold into the multiple analysis categories having the different analysis criteria.

The assigning may include: generating prompting information to request assessment of correlation between the information included in the data associated with the target area and the task type; transmitting the generated prompting information to an AI server; receiving a result code from the AI server; and assigning a correlation value to each piece of the information included in the data, based on the received result code.

The multiple analysis categories may include at least two of the following: Macro Industry Trend, Micro Industry Trend, Demographic Trend, Development Pattern, Transportation, Safety and Security, Local Business Ecosystem, History & Culture, and Urbanistic Quality.

The calculating of the assessment values may include: identifying topics included in each of the multiple analysis categories; generating prompting information to generate the assessment values of the real estate development positioning factors according to each of the identified topics, based on at least part of the information included in the data; transmitting the generated prompting information to an AI server; receiving a result code from the AI server; and based on the received result code, calculating an assessment value of each of the real estate development positioning factors regarding the target area and the task type within each of the multiple analysis categories.

The real estate development positioning factors may include at least one of the following: Service Level and Quality, Themed Experience, Recreation and Leisure, History & Culture, Community and Social Engagement, Eco-Friendliness, Location and Accessibility, and Functional Amenities.

The method may further include: calculating assessment values for real estate development positioning regarding a current status of the target area; determining a difference between the assessment values for real estate development positioning regarding the current status and assessment values for final real estate development positioning; and generating at least one of text data and image data associated with the determined difference.

The method may further include: based on at least one of the target area, the task type, and the final real estate development positioning, identifying comparative real estate development positioning regarding an architectural status of a different area; based on the comparative real estate development positioning, generating prompting information to request an update of the final real estate development positioning; transmitting the generated prompting information to an AI server; receiving a result code from the AI server; and providing updated final positioning based on the received result code.

The method may further include: based on the final real estate development positioning, generating prompting information to request generation of projection data regarding the target area; transmitting the generated prompting information to an AI server; receiving a result code from the AI server; and verifying projection data of the target area based on the received result code.

In another aspect, there is provided an electronic device for providing real estate development positioning, and the electronic device includes a memory storing instructions, and a processor configured to execute the instructions to: acquire data associated with a target area and a task type; classify at least part of information included in the data into multiple analysis categories having different analysis criteria; based on the at least part of information included in the data and analysis criteria for each of the multiple analysis categories, calculate assessment values of real estate development positioning factors for the target area and the task type within each of the multiple analysis categories; and based on the assessment values of the real estate development positioning factors within each of the multiple analysis categories and preset criteria for an objective architectural task, provide final real estate development positioning for the target area and the task type.

When calculating the assessment values of the real estate development positioning factors for the target area and the task type within each of the multiple analysis categories, the processor may be further configured to: identify topics included in each of the multiple analysis categories; generate prompting information to generate the assessment values of the real estate development positioning factors according to each of the identified topics, based on at least part of the information included in the data; transmit the generated prompting information to an AI server; receive a result code from the AI server; and based on the received result code, calculate an assessment value of each of the real estate development positioning factors regarding the target area and the task type within each of the multiple analysis categories.

The processor may be further configured to: calculate assessment values for real estate development positioning regarding a current status of the target area; determine a difference between the assessment values for real estate development positioning regarding the current status and assessment values for final real estate development positioning; and generate at least one of text data and image data associated with the determined difference.

The processor may be further configured to: based on at least one of the target area, the task type, and the final real estate development positioning, identify comparative real estate development positioning regarding an architectural status of a different area; based on the comparative real estate development positioning, generate prompting information to request an update of the final real estate development positioning; transmit the generated prompting information to an AI server; receive a result code from the AI server; and provide updated final positioning based on the received result code.

The processor may be further configured to: based on the final real estate development positioning, generate prompting information to request generation of projection data regarding the target area; transmit the generated prompting information to an AI server; receive a result code from the AI server; and verify projection data of the target area based on the received result code.

In yet another aspect, there is provided a method for providing real estate development positioning by an electronic device, and the method including: acquiring data associated with a target area and a task type; classifying at least part of information included in the data into multiple analysis categories having different analysis criteria; based on the at least part of information included in the data and criteria for each of the multiple analysis categories, generating prompting information to request calculation of assessment values of real estate development positioning factors for a target area and task type within each of the multiple analysis categories; transmitting the generated prompting information to an AI processor of the electronic device; generating, by the AI processing unit, a result code in response to the prompting information; checking the assessment value of the real estate development positioning factors within each of the multiple analysis categories based on the generated result code; and based on the assessment values of the real estate development positioning factors within each of the multiple analysis categories and preset criteria for an objective task, providing final real estate development positioning for the target area and the task type.

The method may further include: based on at least one of the target area, the task type, and the final real estate development positioning, identifying comparative real estate development positioning regarding an architectural status of a different area; based on the comparative real estate development positioning, generating prompting information to request an update of the final real estate development positioning; transmitting the generated prompting information to an AI processor of the electronic device; generating, by the AI processing unit, a result code in response to the prompting information; and providing updated final positioning based on the generated result code.

### BRIEF DESCRIPTION OF THE DRAWINGS

FIG. 1 is a diagram illustrating an example of a network environment according to an embodiment of the present disclosure.
FIG. 2 is a flowchart illustrating a method for providing real estate development positioning using AI technology according to an embodiment of the present disclosure.
FIGS. 3A and 3D are diagrams illustrating an example of a target area according to an embodiment of the present disclosure.
FIGS. 4A and 4B are diagrams illustrating examples of a database with various types of data collected and analysis categories according to an embodiment of the present disclosure.
FIGS. 5A to 5I are diagrams illustrating real estate development positioning within each of the analysis categories according to an embodiment of the present disclosure.
FIG. 6 is a diagram illustrating an example in which an electronic device provides final real estate development positioning for a target area and a task type according to an embodiment of the present disclosure.
FIG. 7 is a diagram illustrating an example of a flowchart in which an electronic device provides real estate development positioning using AI technology according to an embodiment of the present disclosure.
FIG. 8 is a diagram illustrating an example of current real estate development positioning and final real estate development positioning, which are provided by an electronic device, according to an embodiment of the present disclosure.
FIG. 9 is a flowchart on how an electronic device provides real estate development positioning using Al technology according to an embodiment of the present disclosure.
FIGS. 10A to 10C are diagrams illustrating an example of comparative real estate development positioning by an electronic device according to an embodiment of the present disclosure.
FIG. 11 is a diagram illustrating an example in which an electronic device provides real estate development positioning using AI technology according to an embodiment of the present disclosure.
FIG. 12 is a flowchart illustrating an electronic device providing real estate development positioning using AI technology according to an embodiment of the present disclosure.
FIGS. 13A and 13B are diagrams illustrating an example in which an electronic device calculates projection data using AI technology according to an embodiment of the present disclosure.
FIGS. 14A and 14B are diagrams illustrating an overall flowchart for providing real estate development positioning, according to an embodiment of the present disclosure.
FIGS. 15A and 15B are diagrams illustrating an overall flow diagram for providing real estate development positioning according to an embodiment of the present disclosure. This is a diagram showing the overall flowchart.
FIG. 16 is a diagram illustrating an example of an electronic device that provides real estate development positioning according to an embodiment of the present disclosure.
FIG. 17 is a flowchart illustrating a method for providing real estate development positioning using Al technology according to an embodiment of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In addition, in the following description of the embodiments, a detailed description of known functions and configurations incorporated herein will be omitted when it may impede the understanding of the embodiments.

While terms including ordinal numbers, such as "first" and "second," etc., may be used to describe various components, such components are not limited by the above terms. The above terms are used only to distinguish one component from another.

As used herein, the singular forms "a", "an," and "the" are intended to include the plural forms as well, unless the context clearly indicates otherwise.

In this application, the described steps may be carried out in any sequence, except in cases where a clearly defined cause-and-effect relationship necessitates a specific order.

It will be further understood that the terms "comprise," "include," "have," etc. when used in this specification, specify the presence of stated features, integers, steps, operations, elements, components, and/or combinations of them but do not preclude the presence or addition of one or more other features, integers, steps, operations, elements, components, and/or combinations thereof.

According to various embodiments of the present disclosure, AI technology may refer to AI itself or a technology for researching the methodology to create AI. Machine learning, which is an example of the AI technology, may be an algorithmic technology in which a computer system automatically learns from data and recognizes patterns to make decisions or make predictions. Machine learning involves building models based on data and making predictions or decisions on new data using the models.

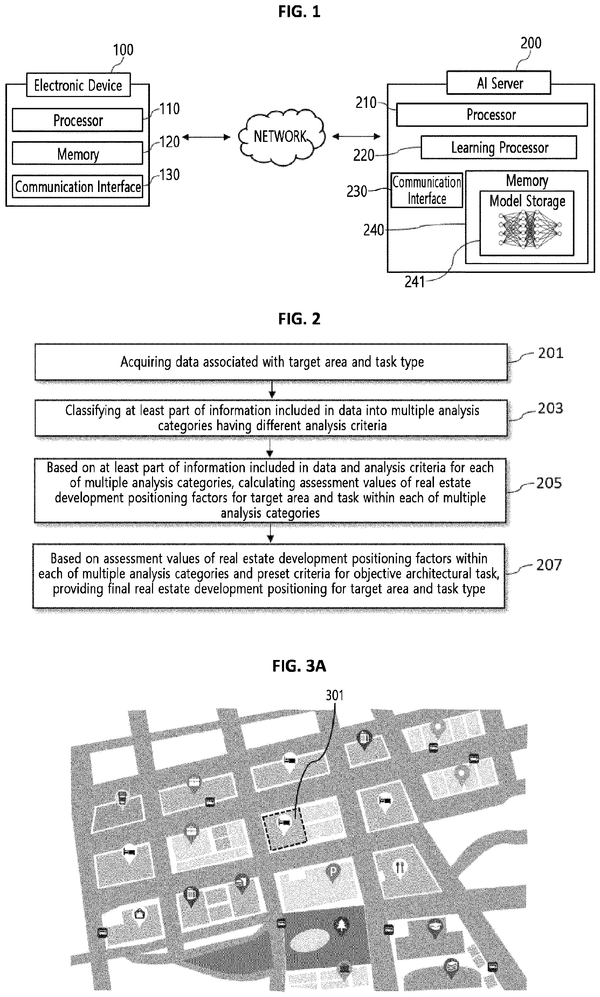

FIG. 1 is a diagram illustrating an example of a network environment according to an embodiment of the present disclosure.

Hereinafter, the present disclosure will be described with reference to the attached drawings.

According to various embodiments of the present disclosure, an electronic device 100 may be connected to an Al server 200 through a network. Communication schemes for a network are not limited. The communication schemes may include not only a communication scheme to utilize a telecommunication network (for example, a mobile communication network, wired Internet, wireless Internet, and a broadcast network), but also a short-range radio communication scheme.

The electronic device 100 according to various embodiments of the present disclosure may be implemented as a computer device or a plurality of computer devices providing commands, codes, files, content, services, etc. For convenience of explanation, the electronic device 100 according to an embodiment has been described as a single electronic device. However, the electronic device 100 may be composed of a plurality of electronic devices providing different functions or services.

According to various embodiments of the present disclosure, the electronic device 100 may include at least one of the following: a smartphone, a tablet personal computer (tablet PC), a mobile phone, a video phone, an e-book reader, a desktop personal computer (desktop PC), a laptop personal computer (laptop PC), a netbook computer, a workstation, a server, a personal digital assistant (PDA), a portable multimedia player (PMP), an MP3 player, a mobile medical device, a camera, and a wearable device. The electronic device 100 may be a server that performs functions corresponding to various embodiments of the present disclosure, respectively.

According to various embodiments of the present disclosure, when the electronic device 100 needs to perform a specific function or service automatically or upon a user's request, the electronic device 100 may request at least some associated functions from an external server, instead of or in addition to executing the specific function or service itself. The electronic device 100 may provide the requested function or service by processing a received result from an external server as-is or additionally. For example, cloud computing, distributed computing, or client-server computing technologies may be employed.

Referring to FIG. 1, according to various embodiments, the electronic device 100 may include a processor 110, a memory 120, and a communication interface 130. In one embodiment, at least one of the components of the electronic device 100 may be omitted or another component may be additionally provided. For example, the electronic device 100 may additionally be provided with an input unit that serves as an interface for delivering commands or data input from the user or other external devices to other components of the electronic device 100. In another example, the electronic device 100 may be provided with an output unit such as a display, a touchscreen, a speaker, a vibration generator, and a haptic feedback generator. In yet another example, the electronic device 100 may include an operating system for controlling resources related to the electronic device 100 and/or various applications running on the operating system. For instance, the electronic device 100 may include one or more applications capable of performing functions such as home, dialer, Short Message Service (SMS)/Multimedia Messaging Service (MMS), browser, camera, calendar, and more.

The processor 110 may control the overall operation of the memory 120 and the communication interface 130. According to various embodiments of the present disclosure, the memory 120 may function as a storage medium, capable of storing multiple applications running on the electronic device 100, as well as data and commands required for the operation of the electronic device 100. In one embodiment, the memory 120 may be provided in the form of any of various hardware storage devices such as a read-only memory (ROM), a random-access memory (RAM), a flash drive, a hard drive, etc., or may be provided in the form of web storage. The communication interface 130 may communicate with the electronic device 100 over a network in a wired or wireless manner.

The processor 110 according to various embodiments may acquire data associated with a target area and a task type.

Here, a target area may refer to a physical area targeted for real estate development positioning. For example, the target area may include states, counties, cities, towns, villages, specific regions (e.g., urban areas, residential areas, industrial parks, coastal areas, suburban areas, and administrative units in South Korea such as do, si, gun, gu, eup, myeon, dong, and ri), or specific sites (e.g., physical locations where specific architecture projects or developments will be underway).

Here, the task type may be any of various architectural purposes of real estate development positioning. For example, the task type may include hotel renovation, residential construction, establishment of educational facilities (e.g., schools, universities, libraries, research facilities, etc.), establishment of medical facilities (e.g., hospitals, clinics, rehabilitation centers, research laboratories, etc.), commercial buildings (e.g., shopping malls, office buildings, hotels, restaurants, banking facilities, etc.), public facilities (e.g., government buildings, museums, exhibition halls, cultural centers, performance venues, etc.), industrial facilities (e.g., factories, warehouses, data centers, research and development facilities, etc.), residential renovations (e.g., housing remodeling, etc.), or cultural preservation (e.g., restoration of buildings with historical and cultural value, etc.).

The processor 110 according to various embodiments may acquire quantitative and qualitative data associated with a target area and a task type. In one embodiment, the processor 110 may acquire data, such as external expert data (e.g., Deloitte^{®} and KPMG^{®} real estate data), data from commercial real estate information companies (e.g., CoStar^{®} for commercial real estate information), legal regulation data for a target area (e.g., local ordinances for Gangnam District, laws of South Korea, California state laws, federal laws, San Antonio city ordinances in Texas, etc.), news data (e.g., CNN^{®}, USA Today^{®}, etc.), local publication data (e.g., local newspapers, Texas Monthly^{®}, San Antonio Express News^{®}, etc.), popular blog data, cost estimation data (e.g., data provided by companies specializing in estimating construction costs), and statistical data (e.g., data provided by population statistics providers, traffic statistics providers, mobile population providers, visitor statistics providers, etc.).

For example, the processor 110 may request data associated with a target area and a task type from external servers providing different data, and may receive various qualitative and quantitative data from the respective external servers to store in the memory 120. In another example, the processor 110 may request various data from each company and the operator of the electronic device 100 may store each of the received data separately in the memory 120 of the electronic device 100.

In one embodiment, quantitative data associated with a target area and a task type may include at least one of population density data, economic indicators data, traffic statistics data, architectural infrastructure data, and environmental data related to the target area (e.g., a specific site, a specific section, etc.) and the task type. Here, the quantitative data associated with the target area and task type are not limited to the aforementioned data but may include at least one of the following: rental price data, real estate market price data, vacancy rate trend data, construction cost data, surrounding development status data, relevant regulatory data, mobile population data, visitor statistics data, etc.

Here, the population density data may include data on how densely the target area is populated. The economic indicators data may include data on income levels, employment rates, industrial structure, consumption patterns, etc. The traffic statistics data may include data on vehicle flows in the proximity of the target area, public transportation utilization rates, traffic accident statistics, efficiency of transportation networks, etc. The architectural infrastructure data may include data on the quantity and types of buildings, building materials, construction years, energy efficiency, etc. The environmental data may include data on climate change, environmental pollution, biodiversity, etc. within the target area.

In one embodiment, qualitative data associated with a target area and a task type may include at least one of SNS data, local community feedback data, cultural value data, and quality-of-life data, all of which are associated with the target area (e.g., a specific site, a specific section, etc.) and task type. Here, the qualitative data associated with the target area and task type are not limited to the mentioned data but may include at least one of security and safety data, local economic activity data, future market trend data, etc.

Here, the SNS data may include data on people's positive or negative sentiments, preferences, opinions, etc., regarding the target area. The local community feedback data may include data on the architectural needs and expectations of local residents near the target area. The cultural value data may include data on the history, traditions, arts, etc., regarding the target area. The quality-of-life data may include data on residential environment, education, health, safety, leisure activities, etc., regarding the target area.

According to various embodiments of the present disclosure, the processor 110 may acquire data associated with a target area and task type, and then convert the acquired data into an analyzable format. For example, the processor 110 may structure the acquired data into an analyzable format through processes such as data refinement (e.g., removing duplicate data, identifying data errors, assessing data anomalies), data transformation (e.g., format conversion, data integration, data segmentation), and data structuring (e.g., organizing data into tables, lists, etc.).

In one embodiment, the processor 110 may collect data associated with a target area and task type using Al technology. The processor 110 may then structure the collected data (e.g., qualitative and/or quantitative data) into an analyzable format using Al technology.

According to various embodiments of the present disclosure, the processor 110 may classify at least partial information included in the data into multiple analysis categories having different criteria.

In one embodiment, the processor 110 may assign correlation values to information included in the data associated with the target area and task type based on a preset correlation measurement function. Here, the preset correlation measurement function may be a criterion function that quantifies the correlation between data, evaluating the correlation between the target area, the task type, and data acquired from an external source.

For example, the preset correlation measurement function may determine a degree to which data (e.g., CNN reports, expert reports, etc.) for a target area (e.g., a specific site in Texas) correlates with the target area (e.g., a specific site in Texas, a district of New York) targeted for real estate development positioning and a task type (e.g., hotel renovation). The preset correlation measurement function may include correlation measurement analysis criteria that are used to perform tasks such as directly evaluating the relevance to objective data of a project (e.g., an architectural task), analyzing statistical relationships between variables in datasets and key metrics of the project, and conducting keyword assessments.

In another example, the processor 110 may generate prompting information to request assessment of correlation between data associated with a target area and a task type, the target area, and the task type. The processor 110 may transmit the generated prompting information to an AI server and receive a result code from the AI server. Based on the received result code, the processor 110 may assign a correlation value to each piece of information included in each of the data. Here, the prompting information may include text, questions, or information input by the processor 110 for transmission to the AI server. For example, the processor 110 may provide a starting point for a desired task or question to the AI server 200 through prompting information and receive a response from the AI server 200.

According to various embodiments of the present disclosure, the processor 110 may identify information with an assigned correlation value that exceeds the preset correlation threshold. For instance, the processor 110 may confirm a correlation value (e.g., "0," "1," "2," "3," or "low," "medium," "high") for each acquired data (e.g., qualitative and quantitative data). The processor 110 may classify information corresponding to data exceeding the preset correlation threshold into multiple analysis categories having different analysis criteria. For example, the processor 110 may extract information with a correlation value exceeding "0" or "low" when the preset correlation threshold is "0" or "low." In another example, the processor 110 may extract information with a correlation value exceeding "1" or "medium" when the preset correlation threshold is "1" or "medium."

According to various embodiments, the processor 110 may calculate assessment values of real estate development positioning factors for a target area and a task type, based on at least part of the information included in the data (e.g., information exceeding a preset correlation threshold) and the analysis criteria of multiple analysis categories.

Here, the multiple analysis categories may be categories for analyzing and assessing information for the target area and task type based on different criteria.

For example, the analysis categories may include at least two of the following categories: Macro Industry Trend, Micro Industry Trend, Demographic Trend, Development Pattern, Transportation, Safety and Security, Local Business Ecosystem, History & Culture, and Urbanistic Quality. According to various embodiments of the present disclosure, depending on the target area and/or task type, at least some of the aforementioned analysis categories may be omitted or other categories may be additionally included. Here, the analysis categories may not be provided in plural, but instead may include at least one of the following categories: Macro Industry Trend, Micro Industry Trend, Demographic Trend, Development Pattern, Transportation, Safety and Security, Local Business Ecosystem, History & Culture, and Urbanistic Quality. Additionally, the analysis categories may not be limited to the aforementioned examples, but instead may include at least one of an environment-related category, a natural environmental regulatory-related category, and a local resource category.

Macro Industry Trend may be a category related to industry changes at national, regional, or district levels, hospitality changes, policy changes, etc. Macro Industry Trend may be comprised of topics including: Customer Experience Enhancement; Health, Safety, and Sustainability; Strategic Market Analysis; Marketing and Engagement; Operational and Business Efficiency; Innovation and Technology; and Design and Quality Assurance. For instance, the processor 110 may provide functionalities to allocate and analyze information included in data according to each specific topic within the category of Macro Industry Trend. In the above example, information "A" included in real estate expert report data may be allocated to Marketing and Engagement, while information "B" may be allocated to Innovation and Technology.

Micro Industry Trend may be a category related to a specific industry, a specific district, specific real estates, or a specific project. Micro Industry Trend may be comprised of topics including: Market Dynamics and Industry Analysis; Impact of External Factors on Hospitality; Tourism Trends and Attractions; Innovation and Trends in Hospitality; Event-Driven Hospitality Demand; Customer Preferences and Services; Food & Beverage Strategy; Environmental Awareness and Sustainability; Community and Cultural Engagement; and Crisis Management and Contingency. For example, the processor 110 may provide functionalities to allocate and analyze information included in data according to each specific topic within the category of Micro Industry Trend. In the above example, information "A" included in news data may be allocated to Customer Preferences and Services, while information "B" may be allocated to Community and Cultural Engagement.

Demographic Trend may be a category related to census, demography, population age, population sex ratio, migration patterns, etc. Demographic Trend may be comprised of topics including: Demographic Changes and Population Dynamics; Urban Development and Local Economy; Population Growth and Its Implications; and Changes in Industry and Services. For example, the processor 110 may provide functionalities to allocate and analyze information included in data according to each specific topic within the category of Demographic Trend. In the above example, information "A" included in local newspapers (e.g., New York Times, Gangnam-gu Newspaper) may be allocated to Demographic Changes and Population Dynamics, while information "B" may be allocated to Urban Development and Local Economy.

Development Pattern may be a category related to residential, commercial, infrastructure development, environmental conservation, etc. of an area, section, or site. Development Pattern may be comprised of topics including: Urban Development and Planning; Economic and Business Dynamics; Infrastructure and Community Development; Social and Community Concerns; and Specific Industry Focus. For example, the processor 110 may provide functionalities to allocate and analyze information included in data according to each specific topic within the category of Development Pattern. In the above example, information "A" included in local newspapers (e.g., New York Times, Gangnam-gu Newspaper) may be allocated to Urban Development and Planning, while information "B" may be allocated to Social and Community Concerns.

Transportation may be a category related to transportation systems, development of transportation modes (e.g., roads, railways, airports), etc. of an area, section, or site. Transportation may be composed of topics including: Weather and Environmental Impacts on Transportation; Infrastructure and Regulatory Influences; Social and Economic Factors; Urban Planning and City Dynamics; Security and Law Enforcement; and Adaptation and Response to Change. For example, the processor 110 may provide functionalities to allocate and analyze information included in the data according to each specific topic within the category of Transportation. In the above example, information "A" included in legal regulations (e.g., San Antonio ordinances in Texas, Gangnam-gu ordinances in South Korea, federal laws, state laws, etc.) may be allocated to Infrastructure and Regulatory Influences, while information "B" may be allocated to Urban Planning and City Dynamics.

Safety and Security may be a category related to crime rates, public safety, etc. of an area, section, or site. Safety and Security may be comprised of topics including: Crime and Public Safety; Public Health and Safety; Mass Gatherings and Event Safety; and Emergency Situations and Disaster Response. For example, the processor 110 may provide functionalities to allocate and analyze information included in data according to each specific topic within the category of Safety and Security. In the above example, information "A" included in news data may be allocated to Crime and Public Safety, while information "B" may be allocated to Emergency Situations and Disaster Response.

Local Business Ecosystem may be a category related to business environment, corporate ecosystem, startup ecosystem, etc. of an area, section, or site. Local Business Ecosystem may be comprised of topics including: Economic Impact and Market Dynamics; Social and Community Development; Environmental and Regulatory Factors; and Luxury and High-End Market Focus. For example, the processor 110 may provide functionalities to allocate and analyze information included in data according to each specific topic included in the category of Local Business Ecosystem. In the above example, information "A" included in the news may be allocated to Economic Impact and Market Dynamics, while information "B" may be allocated to Luxury and High-End Market Focus.

History & Culture may be a category related to history, culture, arts, heritage, etc. of an area, section, or site. History & Culture may be comprised of topics including: Historical Significance; Heritage and Landmarks; Cultural Impact; Community Identity and Events; and Economic, Socio-Economic Factors and Business Dynamics. For example, the processor 110 may provide functionalities to allocate and analyze information included in data according to each specific topic included in the category of History & Culture. In the above example, information "A" included in the news may be allocated to Historical Significance, while information "B" may be allocated to Community Identity and Events.

Urbanistic Quality may be a category related to residential environment, education, healthcare, cultural facilities, environmental sustainability, etc. of an area, section, or site. Urbanistic Quality may be comprised of topics including: Urban Development and Infrastructure; Cultural, Historical, and Community Dynamics; Tourism, Attractions, and Urban Lifestyle; Residential and Economic Impact; Urban Image; and Investment and Health Concerns. For example, the processor 110 may provide functionalities to allocate and analyze information included in data according to each specific topic included in the category of Urbanistic Quality. In the above example, information "A" included in the news may be allocated to Urban Development and Infrastructure, while information "B" may be allocated to Investment and Health Concerns.

According to various embodiments, the processor 110 may provide final real estate development positioning for a target area and a task type, based on assessment values of real estate development positioning factors within each of the multiple analysis categories and preset criteria for an objective task.

In one embodiment, regarding the target area and task type, the assessment values of the real estate development positioning factors may vary with respect to the multiple analysis categories. For example, since each analysis category has different analysis criteria and topics, assessment values of the real estate development positioning factors may vary with respect to the multiple analysis categories.

Here, the real estate development positioning factors may refer to various factors that constitute optimized real estate development positioning for a target area (e.g., a specific site, district, etc.) and a task type (e.g., hotel renovation, building construction, district development). For example, the real estate development positioning factors may include Service Level and Quality, Themed Experience, History & Culture, Community and Social Engagement, Eco-Friendliness, Location and Accessibility, Functional Amenities, etc. The real estate development positioning factors may vary depending on a target area and/or task type.

According to various embodiments, the processor 110 may provide functionalities to identify and analyze information included in data according to each of the multiple analysis categories having different topics, in order to calculate assessment values of the respective real estate development positioning factors (e.g., Service Level and Quality, Themed Experience, Recreation and Leisure, Historical or Cultural Integration, Community and Social Engagement, Eco-Friendliness, Location and Accessibility, and Functional Amenities). In one embodiment, the processor 110 may provide functionalities to calculate assessment values of the real estate development positioning factors based on different topics of the multiple analysis categories. For example, an assessment value of Service Level and Quality in the category of Development Pattern may be 4 points, while an assessment value of Service Level and Quality in the Safety and Security may be 3 points.

According to various embodiments, the processor 110 may calculate assessment values of the real estate development positioning factors within each of the multiple analysis categories, and then provide final real estate development positioning based on preset criteria for an objective task (e.g., operational profit, environmental impact, or government tax recovery during development).

According to various embodiments, the processor 110 may identify topics included in each of the multiple analysis categories (e.g., History & Culture, the Urbanistic Quality). The processor 110 may generate prompting information to create a score for each real estate development positioning factor according to each identified topic, based on at least part of the information included in the data. The processor 110 may transmit the generated prompting information to the Al server 200. The processor 110 may receive a result code from the Al server 200. Based on the received result code, the processor 110 may calculate assessment values of real estate development positioning factors for the target area and task type within each of the multiple analysis categories.

According to various embodiments, the Al server 200 may include a processor 210, a learning processor 220, a communication interface 230, and a memory 240. In one embodiment, the AI server 200 may refer to a device that trains an artificial neural network using a machine learning algorithm or utilizes a trained artificial neural network. Here, the Al server 200 may not include at least one of the components of the AI server 200 shown in FIG. 1 or may additionally include other components. The AI server 200 may include a plurality of servers to perform distributed processing, and the functionalities of the AI server 200 may be included as part of the configuration of the electronic device 100 or an external server.

According to various embodiments, the processor 210 may infer result values for new input data by using a trained model, and generate responses or control commands based on the inferred result values.

According to various embodiments, the learning processor 220 may train an artificial neural network using training data. Here, the trained model may be used on the AI server 200 of the artificial neural network or may be used on an external device such as the electronic device 100 and an external server. In one embodiment, the trained model, which is a detection model trained based on AI, may be a model based on neural networks. In one embodiment, an object detection model may be designed to simulate the structure of the human brain on a computer and may include multiple network nodes with weights, the nodes which simulate neurons in the human nervous system.

According to various embodiments, the multiple network nodes may form a connection relationship to simulate synaptic activity of neurons that transmit signals through synapses. In one embodiment, the object detection model may include a neural network model or a deep learning model evolved from the neural network model. In the deep learning model, multiple network nodes may exchange data based on convolutional connection relationships while positioned in different layers. For example, the object detection model may include Deep Neural Network (DNN), Recurrent Neural Network (RNN), Bidirectional Recurrent Deep Neural Network (BRDNN), etc.

The communication interface 230 may establish communication between the electronic device 100 and an external electronic device. For example, the communication interface 230 may be connected to a network through wireless or wired communication to communicate with an external electronic device (e.g., an external server), the electronic device 100, etc.

According to various embodiments, the memory 240 may include a model storage 241. The model storage 241 may store a model that is being trained or has been trained through the learning processor 220. Here, the trained model may be implemented in hardware, software, or a combination of hardware and software. When the entire or part of the trained model is implemented as software, one or more instructions constituting the trained model may be stored in the memory 240.

According to various embodiments of the present disclosure, the model storage 241 may include an artificial neural network (ANN). In one embodiment, the ANN, which is a model used in artificial neural network machine learning, may refer to a model composed of artificial neurons forming a network through the combination of synapses. Here, the ANN may be defined by connection patterns between neurons in different layers, a learning process for updating model parameters, and an activation function for generating output values.

According to various embodiments, the ANN may include an input layer, an output layer, and optionally at least one hidden layer. In one embodiment, each layer may include one or more nodes, and the ANN may include synapses connecting nodes to each other. In the ANN, each node may output a functional value of an activation function for input signals, weights, and biases received through synapses.

According to various embodiments, model parameters may refer to parameters determined through learning, and may include weights of synaptic connections and biases of neurons. In one embodiment, hyperparameters may refer to parameters that need to be set before learning in a machine learning algorithm, and may include a learning rate, the number of iterations, a mini-batch size, an initialization function, etc.

According to various embodiments, the purpose of training an artificial learning network may be to determine model parameters that minimize a loss function. Here, the loss function may be used as a metric to determine optimal model parameters during the learning process of an artificial neural network. Machine learning may be classified into supervised learning, unsupervised learning, and reinforcement learning based on the learning methods.

According to various embodiments, the supervised learning may refer to a method of training an artificial neural network given a label for training data. Here, the label may refer to an output value that an artificial neural network should infer when the training data is input to the artificial neural network. In one embodiment, the unsupervised learning may refer to training an artificial neural network without labeled training data. In one embodiment, the reinforcement learning may refer to a learning method where an agent defined within a certain environment is trained to select actions maximizing cumulative rewards in each state, or a sequence of the actions.

FIG. 2 is a flowchart illustrating a method for providing real estate development positioning using Al technology according to an embodiment of the present disclosure.

According to various embodiments, operations of FIG. 2 may be performed differently from the specified sequence unless explicitly specifying a particular sequence in the context. That is, the operations may be performed in the specified sequence, may practically be performed simultaneously, or may be performed in the opposite sequence.

In operation 201, an electronic device 100 may acquire data associated with a target area and a task type.

According to various embodiments of the present disclosure, the electronic device 100 may acquire data associated with a target area (e.g., city, town, specific region, specific address) and a task type (e.g., hotel reservation, construction of residential buildings) through the upload of physical materials obtained by the operator or user of an external server or the electronic device 100. Here, the data associated with the target area and task type may include quantitative data (e.g., population density data, economic indicators data, transportation statistics data) and qualitative data (e.g., social networking service (SNS) data, local community feedback data) associated with the target area and task type. Here, the quantitative and qualitative data associated with the target area and task type may include expert reports, commercial real estate data sources, relevant legal regulations (e.g., federal laws, state laws, city ordinances), local commercial sites, etc. associated with the target area and task type.

According to various embodiments, data associated with the target area and task type may contain different information depending on the target area and/or task type. For example, suppose that a first target area is a specific site in Dallas, Texas (e.g., a specific address where a building is located) and a first task type is hotel renovation, while a second target area is a specific site in SoHo, New York (e.g., a specific address where a building is located) and a second task type is hotel renovation, the same as the first task type. In this case, because the first and second target areas are different, the electronic device 100 may acquire different quantitative data (e.g., population density data, economic indicators data, transportation statistics data) and qualitative data (e.g., SNS data, local community feedback data) for each of the first and second target areas.

In another example, suppose that the first target area and the second target area are the same specific site in Dallas, Texas (e.g., a specific address where a building is located) and the first task type is hotel renovation, while the second task type is residential building construction. In this case, the electronic device 100 may acquire different quantitative data (e.g., population density data, economic indicators data, transportation statistics data) and qualitative data (e.g., SNS data, local community feedback data) for each of the first and second target areas.

In operation 203, the electronic device 100 may classify at least part of the information included in the data into multiple analysis categories having different analysis criteria. Here, the multiple analysis categories may include at least two of the following categories: Macro Industry Trend, Micro Industry Trend, Demographic Trend, Development Pattern, Transportation, Safety and Security, Local Business Ecosystem, History & Culture, and Urbanistic Quality. For example, the multiple analysis categories may include all of the following categories: Macro Industry Trend, Micro Industry Trend, Demographic Trend, Development Pattern, Transportation, Safety and Security, Local Business Ecosystem, History & Culture, and Urbanistic Quality. In another example, the multiple analysis categories may include only Macro Industry Trend and Micro Industry Trend.

In one embodiment, the types of multiple analysis categories may be determined based on a target area (e.g., a site or section targeted for real estate development positioning, etc.) and/or a task type (e.g., residential environment improvement task, building renovation, etc.). For example, if a target area for real estate development positioning is suburban rather than urban, the electronic device 100 may use analysis categories, excluding Urbanistic Quality, for real estate development positioning.

In another embodiment, the types of multiple analysis categories may be determined based on a user's selection input (e.g., a selection input by a user of the electronic device 100). For example, when the electronic device 100 performs real estate development positioning for a target area and a task type, the operator of the electronic device 100 may select the types of analysis categories. The electronic device 100 may determine the types of analysis categories in response to the operator's input of selection.

According to various embodiments, each category included in the multiple analysis categories may include topics corresponding to the characteristics thereof. For instance, Macro Industry Trend may include topics related to industry changes at national or regional levels, such as Customer Experience Enhancement or Innovation and Technology. In the above example, the electronic device 100 may provide functionality to categorize information included in data associated with the target area and task type into topics included in the category of Macro Industry Trend, such as Customer Experience Enhancement or Innovation and Technology. By categorizing the information into the topics, the electronic device 100 may analyze the impact on real estate development positioning for the target area and task type.

In yet another example, the category of History & Culture may include topics related to culture of an area, section, site, etc., such as Historical Significance or Cultural Impact. In the above example, the electronic device 100 may provide functionality to categorize information included in data associated with a target area and task type into topics included in the category of History & Culture, such as Historical Significance or Cultural Impact. By categorizing the information into the topics, the electronic device 100 may analyze the impact on real estate development positioning for the target area and task type.

According to various embodiments, when classifying at least part of the information included in data into multiple analysis categories having different analysis criteria, the electronic device 100 may classify only information exceeding a preset correlation threshold (e.g., "0," "low," "1," "medium" etc.) into the multiple analysis categories and into the topic included in each of the multiple analysis categories.

In one embodiment, the electronic device 100 may assign a correlation value to information included in data based on a preset correlation measurement function. For example, the electronic device 100 may generate prompting information for requesting correlation assessment between data associated with a target area and task type, the target area, and the task type. The electronic device 100 may transmit the generated prompting information to an artificial intelligence (AI) server 200 and receive a result code from the AI server 200. Based on the received result code, the electronic device 100 may assign a correlation value to each piece of information included in the data.

In operation 205, the electronic device 100 may calculate assessment values of real estate development positioning factors for the target area and task type within each of the multiple analysis categories. The calculation may be based on at least part of the information included in the data and the criteria for each of the multiple analysis categories.

In one embodiment, the electronic device 100 may generate prompting information to calculate assessment values of the real estate development positioning factors based on information categorized into topics of each of the multiple analysis categories. The electronic device 100 may transmit the generated prompting information to an Al server 200 and receive a result code from the Al server 200. Based on the received result code, the electronic device 100 may calculate assessment values of the real estate development positioning factors within each analysis category.

In one embodiment, the real estate development positioning factors may include Service Level and Quality, Themed Experience, Functional Amenities, Recreation and Leisure, Location and Accessibility, Eco-Friendliness, Community and Social Engagement, etc. In another embodiment, the real estate development positioning factors may include at least one of the following: Service Level and Quality, Themed Experience, Functional Amenities, Recreation and Leisure, Location and Accessibility, Eco-Friendliness, and Community and Social Engagement. In yet another embodiment, the real estate development positioning factors may vary depending on the target area and/or task type. For example, if the task type is residential development in a specific industrial complex area designated by a state, one of the real estate development positioning factors may be excluded, and instead, taxes may be added. In another example, if the task type is new real estate construction for a commercial real estate company, operating profit may be added to the real estate development positioning factors.

In operation 207, the electronic device 100 may provide final real estate development positioning for the target area and task type based on assessment values of real estate development positioning factors within each of the multiple analysis categories and preset criteria for an objective architectural task.

According to various embodiments, the electronic device 100 may generate prompting information to create final real estate development positioning for the target area and task type. In one embodiment, the electronic device 100 may request prompting information to create final real estate development positioning based on preset criteria for an objective task (e.g., an operating profit rate during construction, an occupancy rate for hotel renovation, total government taxes for government-led redevelopment, etc.) and assessment values analyzed for each category. The electronic device 100 may receive a result code from the AI server 200. Based on the received result code, the electronic device 100 may confirm the final real estate development positioning for the target area and task type.

Here, the final real estate development positioning for the target area and task type may be assessment values of the respective real estate development positioning factors. In one embodiment, the final real estate development positioning may include assessment values associated with the selection of where buildings or structures are best located within a specific area, layout plans for how multiple buildings or structures will be arranged within a single site, orientation settings for buildings or structures, spatial arrangements for the layout of interior spaces, and establishment of relationships with the surrounding environment.

FIGS. 3A to 3D are diagrams illustrating an example of a target area according to an embodiment of the present disclosure.

Referring to FIG. 3A, the target area for real estate development positioning may be a specific site 301. Here, the specific site 301 may refer to a specific geographical location or address for construction.

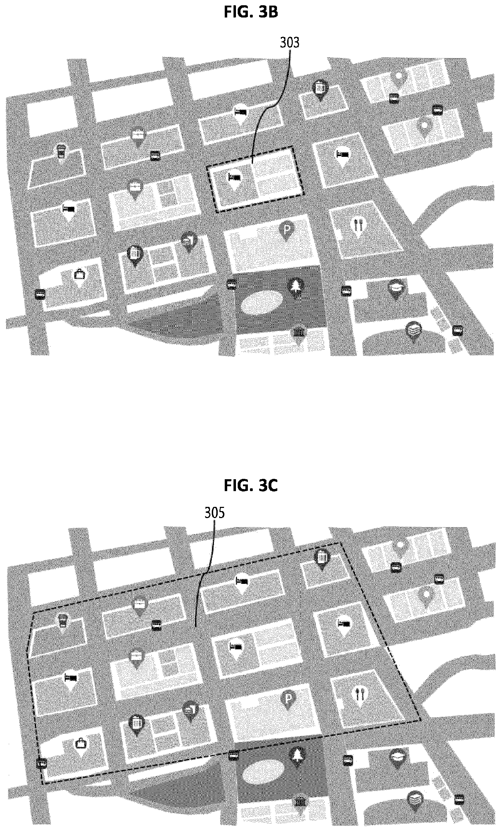

Referring to FIG. 3B, a target area for real estate development positioning may be a specific section 303. Here, the specific section 303 may refer to a geographical area for construction and include several small lots (land parcels) rather than a single lot.

Referring to FIG. 3C, a target area for real estate development positioning may be a specific district 305. Here, the specific district 305 may include various types of districts, including an industrial complex. For example, the specific district 305 may be an industrial complex, a commercial district, a residential district, a historic district, or an educational district. In another example, the specific district 305 may be the "Dallas Downtown Historic District", one of the districts in Texas, as shown in FIG. 3C.

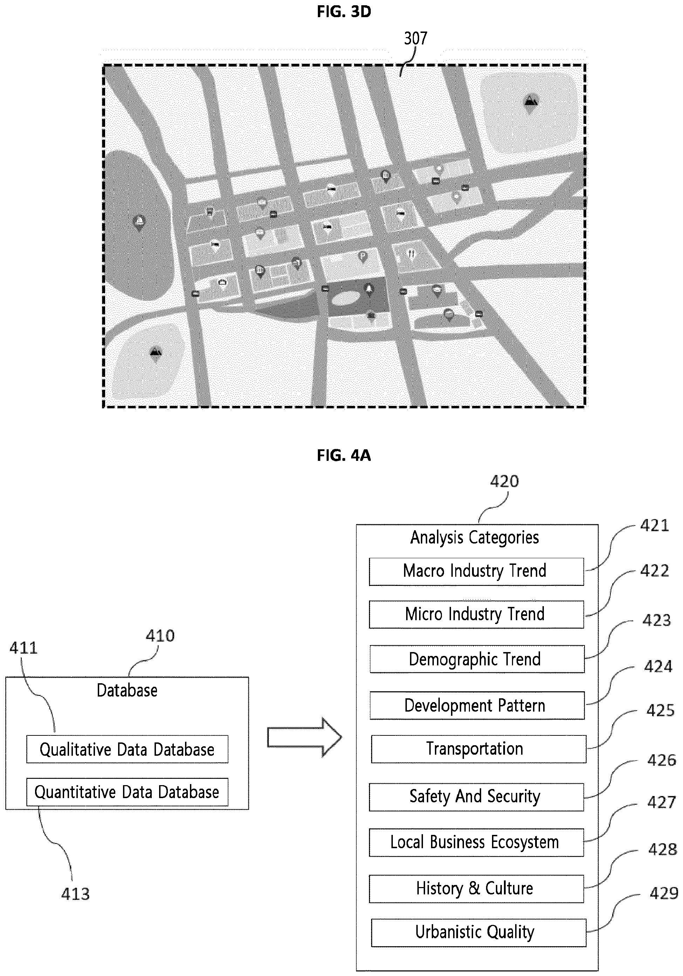

Referring to FIG. 3D, a target area for real estate development positioning may be a specific city 307. For example, the specific city 307 may be Dallas in Texas, or Samseong-dong in Gangnam-gu, Seoul.

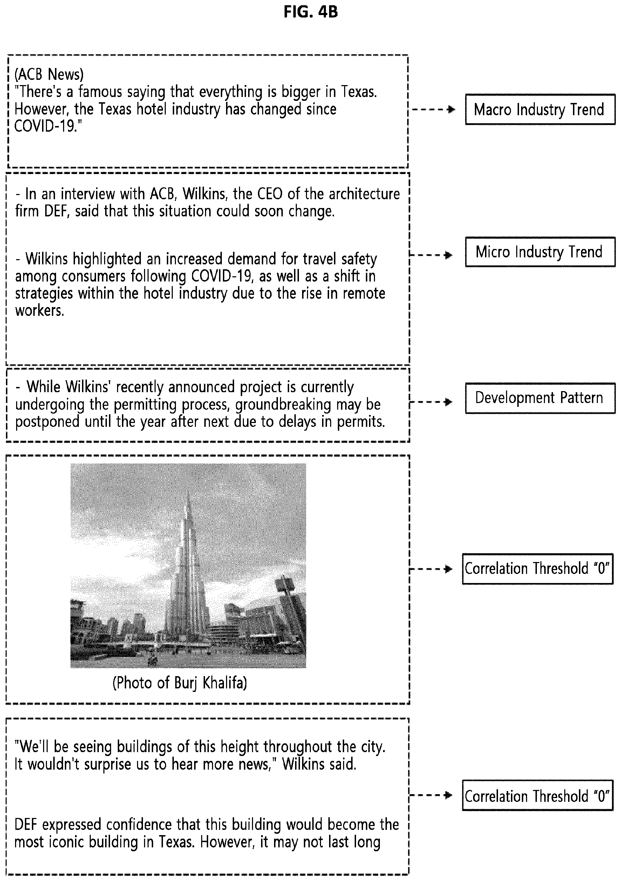

FIGS. 4A and 4B are diagrams illustrating examples of a database with various types of data collected, and analysis categories according to an embodiment of the present disclosure.

Referring to FIG. 4A, according to various embodiments, the database 410 may include a qualitative data database 411 and a quantitative data database 413. For example, the database 410 may be stored in a memory of an electronic device 100. In another example, the database 410 may be stored in a memory of an external electronic device (e.g., an external server). In the above example, the electronic device 100 may request the external electronic device to transmit at least partial data included in the qualitative data database 411 and the quantitative database 413. The electronic device 100 may receive the requested data from an external server.

In one embodiment, the qualitative data associated with the target area and task type may include at least one of SNS data, local community feedback data, cultural value data, and quality-of-life data.

Here, the SNS data and local community feedback data may be data on satisfaction and expectations of people living in the target area or an area related to the task type. The cultural value data may be data related to the historical or cultural significance and characteristics of the target area. The quality-of-life data may be data related to stability, community activities, etc. derived from various architectures located in the target area.

In one embodiment, quantitative data associated with a target area and task type may include at least one of population density data, economic indicators data, traffic statistics data, architectural infrastructure data, and environmental data.

Here, the population density data may be data related to information on an increase or decrease in the population of the target area, the ratio of area to the population number in the target area, population sex ratio, population age, etc. The economic indicators data may be data related to the average income, unemployment rate, number of businesses, etc. in the target area. The traffic statistics data may be data related to data related to the public transportation usage rate, traffic accident rate, etc. in the target area. The architectural infrastructure data may be data related to the types of buildings, number of buildings, etc. in the target area. The environmental data may be data related to the noise level, green space area, air quality indicators, etc. in the target area.

According to various embodiments, analysis categories 420 may include Macro Industry Trend 421, Micro Industry Trend 422, Demographic Trend 423, Development Pattern 424, Transportation 425, Safety and Security 426, Local Business Ecosystem 427, History & Culture 428, and Urbanistic Quality 429.

In one embodiment, the analysis categories 420 may be a module of an external electronic device (e.g., an external server) or a module not shown in FIG. 1 but included in the electronic device 100. In another embodiment, the analysis categories 420 may be a database where information is classified, and may be stored in a memory of an external electronic device (e.g., an external server) or the memory 120 of the electronic device 100.

According to various embodiments, the processor 110 may classify information stored in the database 410 into analysis categories, such as Macro Industry Trend 421, Micro Industry Trend 422, and Demographic Trend 423, Development Pattern 424, Transportation 425, Safety & Security 426, Local Business Ecosystem 427, History & Culture 428, and Urbanistic Quality 429, each category having different analysis criteria. According to various embodiments, the analysis categories 420, and the analysis criteria and topics included in each of the analysis categories 420 may vary depending on a target area (e.g., a region, a district, a site with a specific location) and/or a task type (e.g., hotel renovation, reconstruction, co-op redevelopment, etc.).

To explain an embodiment regarding the analysis categories 420, it is possible to consider a scenario where the target area for real estate development positioning is a "site with a specific location," and the task type is "hotel renovation."

In the above example, according to various embodiments, Macro Industry Trend 421 may include topics including: Customer Experience Enhancement; Health, Safety, and Sustainability; Strategic Market Analysis; Marketing and Engagement; Operational and Business Efficiency; Innovation and Technology; and Design and Quality Assurance.

In one embodiment, Customer Experience Enhancement, which is a topic included in Macro Industry Trend 421, may be divided into sub-classification topics for classifying information in the database 410 according to sub-criteria, and the sub-classification topics may include: Consumer Behavior and Expectations; Technology-Driven Personalization; Integrated Entertainment Experiences; Inclusivity in Luxury Experiences, etc. Health, Safety, and Sustainability, which is a topic included in Macro Industry Trend 421, may be divided into sub-classification topics for classifying information included in the database 410 according to sub-criteria, and the sub-classification topics may include: Adapting to New Norms in Health and Safety for Hospitality; Sustainability as a Competitive Edge in Luxury Travel, etc. Strategic Market Analysis, which is a topic included in Macro Industry Trend 421, may be divided into sub-classification topics for classifying information included in the database 410 according to sub-criteria, and the sub-classification topics may include: Economic Impact and Market Strategy; Focus on Local Demographics; Diversification and Creation of New Revenue Streams, etc. Marketing and Engagement, which is a topic included in Macro Industry Trend 421, may be divided into sub-classification topics including: Trend-Based Marketing Opportunities; Guest Engagement through Social Commerce, etc. Operational and Business Efficiency, which is a topic included in Macro Industry Trend 421, may be divided into sub-classification topics including: Embracing Technology for Hotel Operational Efficiency; Financial Flexibility and Security, etc. Innovation and Technology, which is a topic included in Macro Industry Trend 421, may be divided into sub-classification topics including Digitization & Technological advancement in Hospitality, etc. Design and Quality Assurance, which is a topic included in Macro Industry Trend 421, may be divided into sub-classification topics including: Guest Experience through Quality Design in Hospitality, etc.

In the above example, according to various embodiments, Micro Industry Trend 422 may be comprised of topics including: Market Dynamics and Industry Analysis; Impact of External Factors on Hospitality; Tourism Trends and Attractions; Innovation and Trends in Hospitality; Event-Driven Hospitality Demand; Customer Preferences and Services; Food & Beverage Strategy; Environmental Awareness and Sustainability; Community and Cultural Engagement; and Crisis Management and Contingency.

In one embodiment, Market Dynamics and Industry Analysis, which is a topic included in Micro Industry Trend 422, may be divided into sub-classification topics for classifying information stored in the database 410 according to sub-criteria, and the sub-classification topics may include: Legislative Changes and Market Demand; Population Growth and Changing Customer Base; Market Penetration and Expansion; Industry and Market Analysis; Economic Condition and Impact, etc. Impact of External Factors on Hospitality, which is a topic included in Micro Industry Trend 422, may be divided into sub-classification topics including: Weather Impact on Hospitality; Pandemic Impact on Hospitality; Real Estate Market Conditions; Impact of Climate Conditions on Hospitality; Impact of Health Crisis on Hotel Staff and Guests; Political Stability and Hotel Industry, etc. Tourism Trends and Attraction, which is a topic included in Micro Industry Trend 422, may be divided into sub-classification topics including: Emerging Tourism Attractions; Remote Work Tourism; Historical Site Interest; Transport and Tourism, etc. Innovation and Trends in Hospitality, which is a topic included in Micro Industry Trend 422, may be divided into Innovative Hospitality Trends, Energy Usage and Infrastructure in Hospitality, Industry Trends in Hospitality, Introduction of New Services in Hospitality, etc. Event-Driven Hospitality Demand, which is a topic included in Micro Industry Trend 422, may be divided into sub-classification topics including: Sport Events and Hospitality; Events Leading to Increased Lodging Demand; Conference And Meeting Space Demand; Unmet Nightlife Demand, etc. Customer Preferences and Services, which is a topic included in Micro Industry Trend 422, may be divided into sub-classification topics including: Changes in Customer Preferences; Work from Home and Remote Business Opportunities in Hospitality, etc. Food & Beverage Strategy, which is a topic included in Micro Industry Trend 422, may be divided into sub-classification topics including: Influence of Local Cuisine on Food & Beverage, etc. Environmental Awareness and Sustainability, which is a topic included in Micro Industry Trend 422, may be divided into sub-classification topics including: Environmental Awareness and Hospitality, etc. Community and Cultural Engagement, which is a topic included in Micro Industry Trend 422, may be divided into sub-classification topics including: Municipality And Urban Planning; Community Engagement and Charitable Involvement in Hospitality; Promotion of Local Culture and Activities, etc. Crisis Management and Contingency, which is a topic included in Micro Industry Trend 422, may be divided into sub-classification topics including: Service Disruptions and Contingency Planning; Repositioning Opportunities Following Disasters, etc.

In the above example, according to various embodiments, Demographic Trend 423 may be composed of topics including: Demographic Changes and Population Dynamics; Urban Development and Local Economy; Population Growth and Its Implications; and Changes in Industry and Services.

In one embodiment, Demographic Changes and Population Dynamics, which is a topic included in Demographic Trend 423, may be divided into sub-classification topics including: Environmental and Geographical Influences; Economic and Occupational Influences; Social and Political Influences; Age and Generational Shifts; Specific Interest and Community Initiatives; Business and Clientele Focus, etc. Urban Development and Local Economy, which is a topic included in Demographic Trend 423, may be divided into sub-classification topics including: Impacts of Demographic Trends on Hotel Guest Influx in Target Area; Trends in Target Area's Real Estate and Housing Preferences; Parking Facilities and Development; New Housing Developments and Demographic Change; Local Businesses and Entrepreneurship, etc. Population Growth and Its Implications, which is a topic included in Demographic Trend 423, may be divided into sub-classification topics including: Population Growth and Demographic Trends in Target Area; Remote Work Influencing Target Area's Demographic Trends; Impact of Increasing Population on Utility Services; Population Dynamics due to Store's Proximity and Facilities; Population Dynamics Driven by Community Initiatives in Target Area, etc. Changes in Industry and Services, which is a topic included in Demographic Trend 423, may be divided into sub-classification topics including: Changing Preferences and Trends in the F&B Industry; Effects of Population Shift on Hotel Services, etc.

In the above example, according to various embodiments, Development Pattern 424 may be composed of topics including: Urban Development and Planning; Economic and Business Dynamics; Infrastructure and Community Development; Social and Community Concerns; and Specific Industry Focus.

In one embodiment, Urban Development and Planning, which is a topic included in Development Patterns, may be divided into sub-classification topics including: Urban Development and Demographic Shift; Impact of Societal Changes on Urban Development; Building and Zoning Regulation Changes; Regulatory Changes and Their Impact on Urban Development; Climate Crisis and Urban Planning; Affordable Housing Developments; Housing Market Trends; Transportation Infrastructure Development; Urban Environment Enhancement and Waterfront Development; Historic Preservation and Modern Amenities; Corporate Expansion and Impact on Local Development, etc. Economic and Business Dynamics, which is a topic included in Development Pattern 424, may be divided into sub-classification topics including: Economic Diversification and Hospitality Industry; Implications of Sectoral Growth; Impact of Immigration Policy on Labor Market; Property Ownership and Investment Opportunities; Redevelopment Opportunities and Economic Impact; Societal Trends and Business Response; Workforce Instability and Real Estate Development; Business Operations and COVID-19 Impact; Development Opportunities and Economic Impact, etc. Infrastructure and Community Development, which is a topic included in Development Pattern 424, may be divided into sub-classification topics including: Energy Infrastructure and Resilience; Future Entertainment Infrastructure; Construction Costs and Financing; Natural Disasters and Infrastructure Damage; Community Health Infrastructure and Development; Public Safety and Perception; Infrastructure Developments and Federal Investment; Construction and Infrastructure Development, etc. Social and Community Concerns, which is a topic included in Development Pattern 424, may be divided into sub-classification topics including: Digital Security and Tourism; Local Business Engagement and Community Collaboration; Local Food Supply Chain Transition; Mental Health Resource Availability; Local Education Infrastructure Dynamics; Civic Engagement and Urban Renewal; Community Engagement and Urban Renewal, etc. Specific Industry Focus, which is a topic included in Development Pattern 424, may be divided into sub-classification topics including: Hotel Repositioning and Market-friendly Policies, etc.

In the above example, according to various embodiments, Transportation 425 may be composed of topics such as Weather and Environmental Impacts on Transportation, Infrastructure and Regulatory Influences, Social and Economic Factors, Urban Planning and City Dynamics, Security and Law Enforcement, and Adaptation and Response to Change.

In one embodiment, Weather and Environmental Impacts on Transportation, which is a topic included in Transportation 425, may be divided into sub-classification topics including: Impact of Severe Weather on Transportation in Target Area; Disruptions due to Severe Weather on Transportation, etc. Infrastructure and Regulatory Influences, which is a topic included in Transportation 425, may be divided into sub-classification topics including: Infrastructure and Transportation Issues in Target Area; Effects of Law and Regulations on Transportation in Target Area, etc. Social and Economic Factors, which is a topic included in Transportation 425, may be divided into sub-classification topics including: Effects of Population and Events on Transportation in Target Area; Effects of Economy on Travel Choices in Target Area; Influence of Local Attractions and Culture on Transportation in Target Area, etc. Urban Planning and City Dynamics, which is a topic included in Transportation 425, may be divided into sub-classification topics including: Location Connectivity and Accessibility in Target Area; City Traffic Conditions and Pedestrian Movement in Target Area, etc. Security and Law Enforcement, which is a topic included in Transportation 425, may be divided into sub-classification topics including: Effects of Law Enforcement on Transportation in Target Area, etc. Adaptation and Response to Change, which is a topic included in Transportation 425, may be divided into sub-classification topics including: Disruptions due to Unforeseen Circumstances in Target Area; Adjustment to New Trends and Movements in Target Area; Effects of Law and Regulations on Transportation in Target Area; Effects of Local Security Concerns on Transportation in Target Area, etc.

In the above example, according to various embodiments, Safety and Security 426 may be composed of topics including: Crime and Public Safety, Public Health and Safety, Mass Gatherings and Event Safety, Emergency Situations and Disaster Response, etc.

In one embodiment, Crime and Public Safety, which is a topic included in Safety and Security 426, may be divided into sub-classification topics including: Evaluating Crime and Safety Concerns in Target Area's Neighborhoods; Assessing Local Crime Trends and Their Impact on Target Area; Addressing Vehicle-Related Thefts and Safety Concerns in Target Area; Addressing Cyber Crime Concerns in Target Area; Understanding and Responding to Increasing Telephone Scams in Target Area, etc. Public Health and Safety, which is a topic included in Safety and Security 426, may be divided into sub-classification topics including: Assessing the Impact of Public Health Emergencies in Target Area; Strategies for Enhancing General Safety Measures in Hotels; Analyzing Public Perception of Safety in Target Area; Assessing Safety Concerns at Abandoned Structures in Target Area, etc. Mass Gatherings and Event Safety, which is a topic included in Safety and Security 426, may be divided into sub-classification topics including: Addressing Potential Safety Concerns at Mass Gatherings in Target Area; Public Safety Concerns at Mass Gatherings in Target Area, etc. Emergency Situations and Disaster Response, which is a topic included in Safety and Security 426, may be divided into sub-classification topics including: Safety Concerns Arising from Extreme Weather Events in Target Area; Impact on Safety and Security; Regional Natural Disasters, etc.

In the above example, according to various embodiments, Local Business Ecosystem 427 may be composed of topics including: Economic Impact and Market Dynamics; Social and Community Development; Environmental and Regulatory Factors; and Luxury and High-End Market Focus.

In one embodiment, Economic Impact and Market Dynamics, which is a topic included in Local Business Ecosystem 427, may be divided into sub-classification topics including: Market Influences and Shifts, etc. Social and Community Development, which is a topic included in Local Business Ecosystem 427, may be divided into sub-classification topics including: Growing Influence of Gastronomy on the Local Market; Interplay Between Community Political Landscape and Local Market; Role of Sustainability and Community Involvement in Local Market Dynamics; Consequences of Negative Events on Local Image and Economy; Rising Demand for Local Artisanal Products and Its Market Influence; Elevating High-End Service Standards in the Local Market; Enhancing Outdoor Spaces with Pet-Friendly Venues, etc. Environmental and Regulatory Factors, which is a topic included in Local Business Ecosystem 427, may be divided into sub-classification topics including: Impact of Extreme Weather on the Local Market; Influence of Government Regulations on the Local Market, etc. Luxury and High-End Market Focus, which is a topic included in Local Business Ecosystem 427, may be divided into sub-classification topics including: Trends and Demand in Luxury Accommodation in the Local Market, etc.

In the above example, according to various embodiments, History & Culture 428 may be composed of topics including: Historical Significance, Heritage, and Landmarks; Cultural Impact, Community Identity, and Events; and Economic, Socio-Economic Factors, and Business Dynamics.

In one embodiment, Historical Significance, Heritage, and Landmarks, which is a topic included in History & Culture 428, may be divided into sub-classification topics including: Historical Landmarks; Historical and Cultural Significance; Historical Heritage Preservation, etc. Cultural Impact, Community Identity, and Events, which is a topic included in History & Culture 428, may be divided into sub-classification topics including: Cultural Impact in Communities; Community Identity and Events; Sports and Entertainment Influence, etc. Economic, Socio-Economic Factors, and Business Dynamics, which is a topic included in History & Culture 428, may be divided into sub-classification topics including: Economic and Socio-Economic Factors; Economic Impact and Local Business Dynamics; Holistic Urban Development in Target Area; Market Trends and Customer Demographics, etc.

In the above example, according to various embodiments, Urbanistic Quality 429 may be composed of topics including: Urban Development and Infrastructure; Cultural, Historical, and Community Dynamics; Tourism, Attractions, and Urban Lifestyle; Residential and Economic Impact; and Urban Image, Investment, and Health Concerns.

In one embodiment, architectural infrastructure and Safety, which is a topic included in Urbanistic Quality 429, may be divided into sub-classification topics including: Extreme Weather Conditions and architectural infrastructure; Fire Risk and Safety Measures; Urban Development and Challenges in Target Area; Urban Development and Diversification in Target Area; Vibrant Urban Life in Target Area; Urbanistic Quality in Target Area; Public Health Policies and Urban Activity in Target area, etc. Cultural, Historical, and Community Dynamics, which is a topic included in Urbanistic Quality 429, may be divided into sub-classification topics including: Broadcasting History and City's Cultural Celebrations in Target Area; City's Cultural Celebrations and Their Impact on Urbanistic Quality in Target Area; Postwar Building Aesthetics and Architectural Style in Target Area; City Sports Culture and Community Involvement in Target Area; Urban Engagement and Community Contribution in Target Area; Artistic Innovations in Target Area; Impact of Increased Migrants on Public Spaces in Target Area; Urban Migration and Cultural Vibrancy in Target Area; and Cultural Significance and Integrated Experiences in Target Area. Tourism, Attractions, and Urban Lifestyle, which is a sub-topic included in Urbanistic Quality 429, may be divided into sub-classification topics including: Aesthetic Landscape and Tourist Attraction in Target Area; Urbanistic Quality in Downtown Target Area; Food Spots and Their Contribution to Target Area's Urban Vibe; Urban Perks in Target Area; Food and Shopping; Sustainable Practices and Local Appreciation in Urban Target Area; City Traditions and Retail Sustainability in Target Area, etc. Residential and Economic Impact, which is a topic included in Urbanistic Quality 429, may be divided into sub-classification topics including: Residential Environment Impact on Guest Perception in Target Area; Public Art and City Symbolism in Target Area; Impact of Local Establishments on Urban Quality in Target Area; Impact of Local Establishments on Urban Quality in Target Area; Transportation Availability and Its Impact on Urbanistic Quality in Target Area, etc. Urban Image, Investment, and Health Concerns, which is a topic included in Urbanistic Quality 429, may be divided into sub-classification topics including: Impact of Incidents on Target Area's Urban Image and Investment Attractiveness; Public Health Policies and Urban Activity in Target Area, etc.

Referring to FIG. 4B, there is a diagram illustrating an example in which the electronic device 100 classifies data associated with a target area and task type into an analysis category 420 according to various embodiments of the present disclosure.

According to various embodiments, when classifying at least part of the information included in the data into multiple analysis categories having different analysis criteria, the electronic device 100 may classify only information exceeding a preset correlation threshold (e.g., "0," "low," "1," "normal" etc.) into the multiple analysis categories and topics included in each of the multiple analysis categories.

In one embodiment, the electronic device 100 may assign correlation values to information included in data based on a preset correlation measurement function. For example, the electronic device 100 may generate prompting information for requesting assessment of correlation between data associated with a target area and task type, the target area, and the task type. The electronic device 100 may transmit the generated prompting information to an Al server 200 and receive a result code from the Al server 200. Based on the received result code, the electronic device 100 may assign a correlation value to each piece of information included in the data.

In one embodiment, the electronic device 100 may classify only information exceeding a preset correlation threshold (e.g., "0" and "1") into any associated categories included in the analysis categories 420. For example, the electronic device 100 may determine that the data associated with the target area and task type is "news data," and may classify each piece of information included in the "news data" into associated categories.

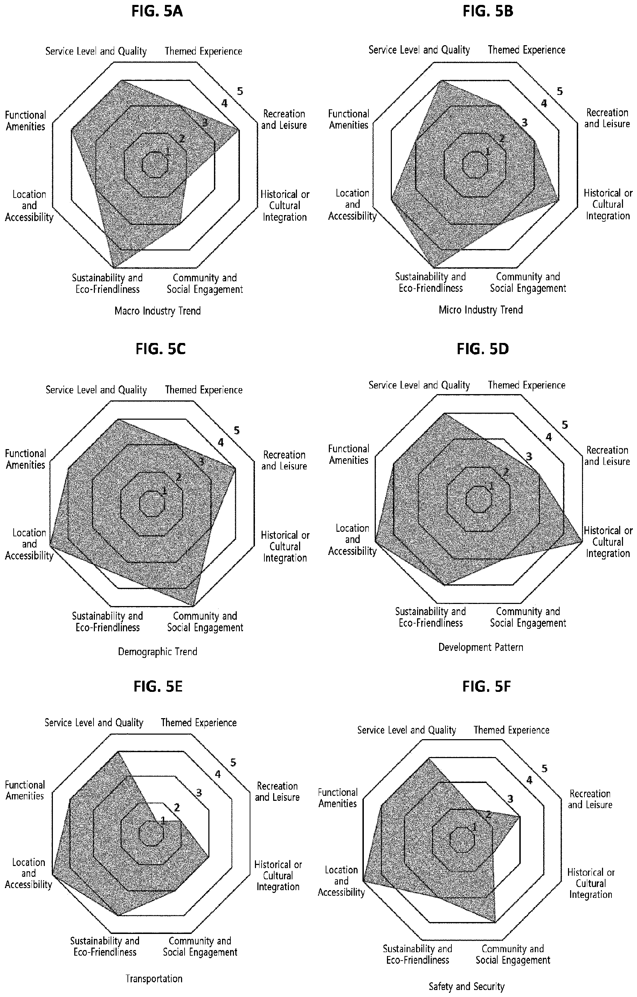

FIGS. 5A to 5I are diagrams illustrating real estate development positioning within each of the analysis categories 420 according to an embodiment of the present disclosure.

Referring to FIG. 5A, the electronic device 100 may calculate assessment values of real estate development positioning factors within Macro Industry Trend 421 included in the analysis categories 420. Here, the real estate development positioning factors may refer to various factors that constitute optimized real estate development positioning for a target area (e.g., a specific site, district, etc.) and a task type (e.g., hotel renovation, building construction, district development).

For example, based on information collected according to each of the sub-criteria for Macro Industry Trend 421, the electronic device 100 may calculate 4 points as an assessment value of Service Level and Quality, 3 points as an assessment value of Themed Experience, 4 points as an assessment value of Recreation and Leisure, 2 points as an assessment value of Historical or Cultural Integration, 3 points as an assessment value of Community and Social Engagement, 5 points as an assessment value of Sustainability and Eco-Friendliness, 3 points as an assessment value of Location and Accessibility, and 4 points as an assessment value of Functional Amenities.

Referring to FIG. 5B, the electronic device 100 may calculate assessment values of real estate development positioning factors within Micro Industry Trend 422 included in the analysis categories 420.

For example, based on information collected according to each of the sub-criteria for Micro Industry Trend 422, the electronic device 100 may calculate 4 points as an assessment value of Service Level and Quality, 3 points as an assessment value of Themed Experience, 3 points as an assessment value of Recreation and Leisure, 4 points as an assessment value of Historical or Cultural Integration, 3 points as an assessment value of Community and Social Engagement, 5 points as an assessment value of Sustainability and Eco-Friendliness, 4 points as an assessment value of Location and Accessibility, and 3 points as an assessment value of Functional Amenities.

Referring to FIG. 5C, the electronic device 100 may calculate assessment values of real estate development positioning factors within Demographic Trend 423 included in the analysis categories 420.

For example, based on information collected according to each of the sub-criteria for Demographic Trend 423, the electronic device 100 may calculate 4 points as an assessment value of Service Level and Quality, 3 points as an assessment value of Themed Experience, 4 points as an assessment value of Recreation and Leisure, 3 points as an assessment value of Historical or Cultural Integration, 5 points as an assessment value of Community and Social Engagement, 3.5 points as an assessment value of Sustainability and Eco-Friendliness, 5 points as an assessment value of Location and Accessibility, and 4 points as an assessment value of Functional Amenities.

Referring to FIG. 5D, the electronic device 100 may calculate assessment values of real estate development positioning factors within Development Pattern 424 included in the analysis categories 420.

For example, based on information collected according to each of the sub-criteria for Development Pattern 424, the electronic device 100 may calculate 4 points as an assessment value of Service Level and Quality, 2.75 points as an assessment value of Themed Experience, 4 points as an assessment value of Recreation and Leisure, 5 points as an assessment value of Historical or Cultural Integration, 3 points as an assessment value of Community and Social Engagement, 4 points as an assessment value of Sustainability and Eco-Friendliness, 5 points as an assessment value of Location and Accessibility, and 4 points as an assessment value of Functional Amenities.

Referring to FIG. 5E, the electronic device 100 may calculate assessment values of real estate development positioning factors within Transportation 425 included in the analysis categories 420.

For example, based on information collected according to each of the sub-criteria for Transportation 425, the electronic device 100 may calculate 4 points as an assessment value of Service Level and Quality, 1 point as an assessment value of Themed Experience, 2 points as an assessment value of Recreation and Leisure, 3 points as an assessment value of Historical or Cultural Integration, 3 points as an assessment value of Community and Social Engagement, 4 points as an assessment value of Sustainability and Eco-Friendliness, 5 points as an assessment value of Location and Accessibility, and 4 points as an assessment value of Functional Amenities.

Referring to FIG. 5F, the electronic device 100 may calculate assessment values of real estate development positioning factors within Safety and Security 426 included in the analysis categories 420.

For example, based on information collected according to each of the sub-criteria of Safety and Security 426, the electronic device 100 may calculate 4 points as an assessment value of Service Level and Quality, 2 points as an assessment value of Themed Experience, 3 points as an assessment value of Recreation and Leisure, 2 points as an assessment value of Historical or Cultural Integration, 4 points as an assessment value of Community and Social Engagement, 3 points as an assessment value of Sustainability and Eco-Friendliness, 5 points as an assessment value of Location and Accessibility, and 4 points as an assessment value of Functional Amenities.

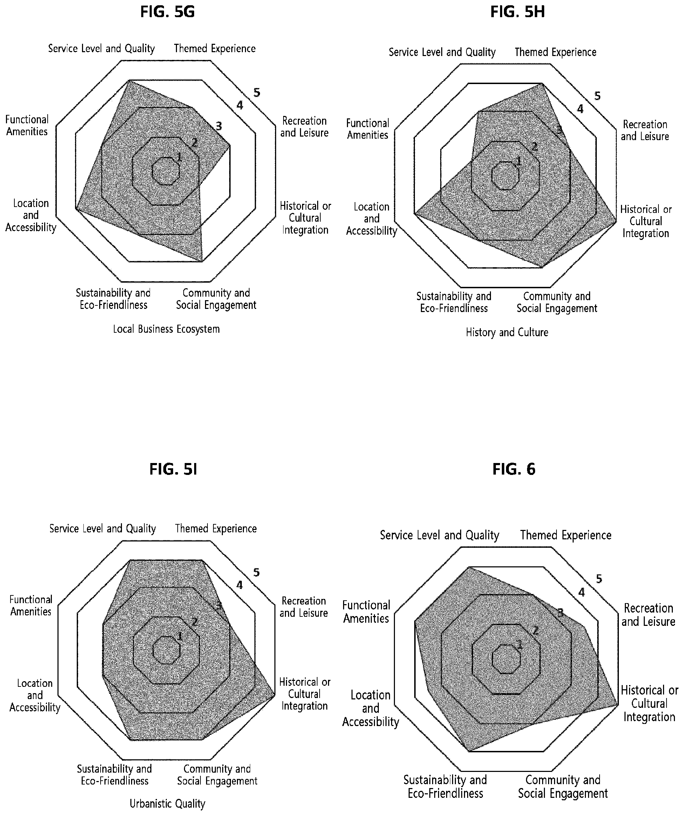

Referring to FIG. 5G, the electronic device 100 may calculate assessment values of real estate development positioning factors within Local Business Ecosystem 427 included in the analysis categories 420.

For example, based on information collected according to each of the sub-criteria for Local Business Ecosystem 427, the electronic device 100 may calculate 4 points as an assessment value of Service Level and Quality, 3 points as an assessment value of Themed Experience, 3 points as an assessment value of Recreation and Leisure, 2 points as an assessment value of Historical or Cultural Integration, 4 points as an assessment value of Community and Social Engagement, 3 points as an assessment value of Sustainability and Eco-Friendliness, 4 points as an assessment value of Location and Accessibility, and 3 points as an assessment value of Functional Amenities.

Referring to FIG. 5H, the electronic device 100 may calculate assessment values of real estate development positioning factors within History & Culture 428 included in the analysis categories 420.

For example, based on information collected according to each of the sub-criteria for History & Culture 428, the electronic device 100 may calculate 3 points as an assessment value of Service Level and Quality, 4 points as an assessment value of Themed Experience, 3 points as an assessment value of Recreation and Leisure, 5 points as an assessment value of Historical or Cultural Integration, 4 points as an assessment value of Community and Social Engagement, 3 points as an assessment value of Sustainability and Eco-Friendliness, 4 points as an assessment value of Location and Accessibility, and 2 points as an assessment value of Functional Amenities.

Referring to FIG. 5I, the electronic device 100 may calculate assessment values of real estate development positioning factors within Urbanistic Quality 429 included in the analysis categories 420.

For example, based on information collected according to each of the sub-criteria for Urbanistic Quality 429, the electronic device 100 may calculate 4 points as an assessment value of Service Level and Quality, 4 points as an assessment value of Themed Experience, 3 points as an assessment value of Recreation and Leisure, 5 points as an assessment value of Historical or Cultural Integration, 4 points as an assessment value of Community and Social Engagement, 4 points as an assessment value of Sustainability and Eco-Friendliness, 3 points as an assessment value of Location and Accessibility, and 3 points as an assessment value of Functional Amenities.

FIG. 6 is a diagram illustrating an example in which an electronic device provides final real estate development positioning for a target area and a task type according to an embodiment of the present disclosure.

Based on assessment values of real estate development positioning factors within each of multiple analysis categories 420 and preset criteria for an objective architectural task, as shown in FIGS. 5A to 5I, an electronic device 100 according to various embodiments may provide final real estate development positioning for a target area and the task type.

The electronic device 100 according to various embodiments may calculate assessment values of the real estate development positioning factors within each of the multiple analysis categories 420 and provide final real estate development positioning based on preset criteria for an objective task (e.g., operational profitability during execution of the objective architectural task, environmental considerations during development, government tax recovery during development, etc.). For example, the electronic device 100 may assign weights based on the preset criteria for the objective task (e.g., operational profitability) to the assessment values of the real estate development positioning factors within at least one of the multiple categories.

According to various embodiments, the electronic device 100 may provide prompting information to generate final real estate development positioning according to the preset criteria for the objective task, based on the assessment values of the real estate development positioning factors within each of the multiple analysis categories 420. The electronic device 100 may transmit the generated prompting information to an Al server 200. The electronic device 100 may receive a result code from the Al server 200 and calculate final real estate development positioning for the target area and the task type based on the received result code.

In one embodiment, the electronic device 100 may calculate assessment values for final real estate development positioning for the target area and task type. For instance, the electronic device 100 may calculate 4 points as an assessment value of Service Level and Quality, 3 points as an assessment value of Themed Experience, 3.5 points as an assessment value of Recreation and Leisure, 5 points as an assessment value of Historical or Cultural Integration, 3 points as an assessment value of Community and Social Engagement, 4 points as an assessment value of Sustainability and Eco-Friendliness, 3.5 points as an assessment value of Location and Accessibility, and 4 points as an assessment value of Functional Amenities. The electronic device 100 may also generate the reason for deriving the assessment values for final real estate development positioning and a description of each factor in the final real estate development positioning.

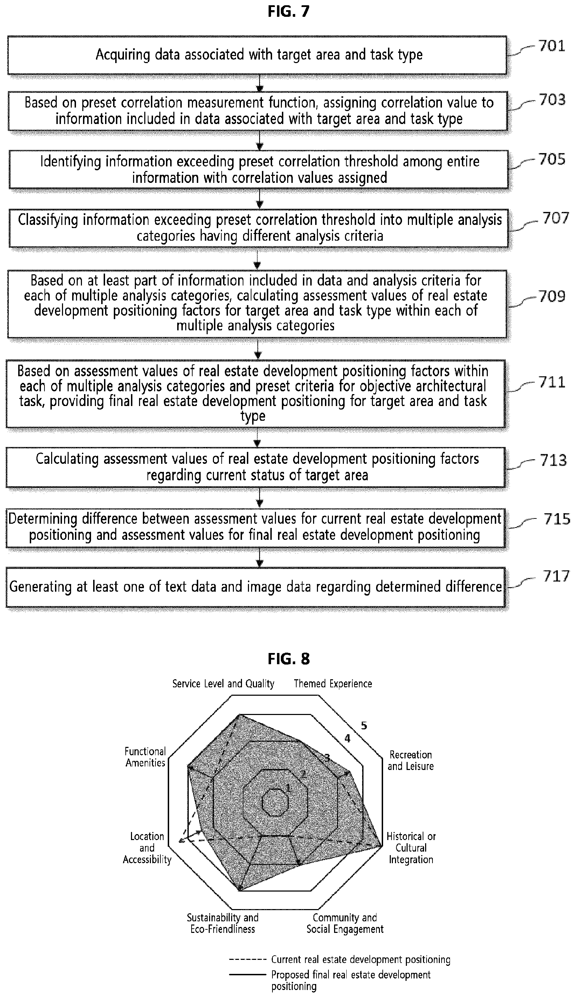

FIG. 7 is a diagram illustrating an example in which the electronic device 100 provides real estate development positioning using Al technology according to various embodiments of the present disclosure. According to various embodiments, operations of FIG. 7 may be performed differently from the specified sequence unless explicitly stated otherwise in the context. That is, the operations may be performed in the specified sequence, may practically be performed simultaneously, or may be performed in the opposite sequence.

To illustrate an example of the electronic device 100 providing architectural positioning, it may be assumed that a target area for real estate development positioning is a "site with a specific location," and a task type is "hotel renovation."

Since operation 701 is substantially identical to operation 201 of FIG. 2, a detailed description thereof is omitted. In operation 703, the electronic device 100 may assign correlation values to information included in data associated with a target area and task type, based on a preset correlation measurement function. In operation 705, the electronic device 100 may identify information exceeding a preset correlation threshold (e.g., a correlation threshold of "0") among the entire information with correlation values assigned. In operation 707, the electronic device 100 may classify information exceeding the preset correlation threshold into multiple analysis categories 420 having different analysis criteria. Since operations 709 and 711 are substantially identical to operations 205 and 207 of FIG. 2, respectively, detailed descriptions thereof are omitted.

In operation 713, the electronic device 100 may calculate assessment values of the real estate development positioning factors regarding the current status of the target area. For example, the electronic device 100 may calculate assessment values of the real estate development positioning factors regarding the current status (e.g., hotel) located in the target area. For example, the electronic device 100 may calculate assessment values for various aspects regarding the current hotel located in the target area, the aspects including: Service Level and Quality, Themed Experience, Recreation and Leisure, Historical or Cultural Integration, Community and Social Engagement, Sustainability and Eco-Friendliness, Location and Accessibility, and Functional Amenities.

In operation 715, the electronic device 100 may determine a difference between the assessment values regarding the current real estate development positioning and the assessment values regarding the final real estate development positioning. In operation 717, the electronic device 100 may generate at least one of text data and image data regarding the determined difference.

FIG. 8 is a diagram illustrating an example of current real estate development positioning and final real estate development positioning, which are provided by an electronic device, according to an embodiment of the present disclosure.

According to various embodiments, an electronic device 100 may determine a difference between assessment values regarding the current real estate development positioning and the assessment values regarding the final real estate development positioning. The electronic device 100 may generate at least one of text data and image data regarding the determined difference. In one embodiment, the electronic device 100 may provide a graphical user interface to show the assessment values regarding the current real estate development positioning and the assessment values regarding the final real estate development positioning, which is provided based on qualitative data and quantitative data.

For example, the assessment values for the real estate development positioning factors regarding the current status may be calculated as 4 points for Service Level and Quality, 3 points for Themed Experience, 3 points for Recreation and Leisure, 5 points for Historical or Cultural Integration, 2 points for Community and Social Engagement, 4.5 points for Sustainability and Eco-Friendliness, 4.5 points for Location and Accessibility, and 3 points for Functional Amenities. The electronic device 100 may compare and analyze assessment values for the current real estate development positioning described above and the assessment values for the final real estate development positioning shown in FIG. 6 .

In one embodiment, when the electronic device 100 includes a display module, a result of comparison with the assessment values for final real estate development positioning shown in FIG. 8 may be displayed through a graphic user interface provided on an area of the screen of the electronic device 100. In another embodiment, the electronic device 100 may transmit the corresponding graphical user interface to an external link server.

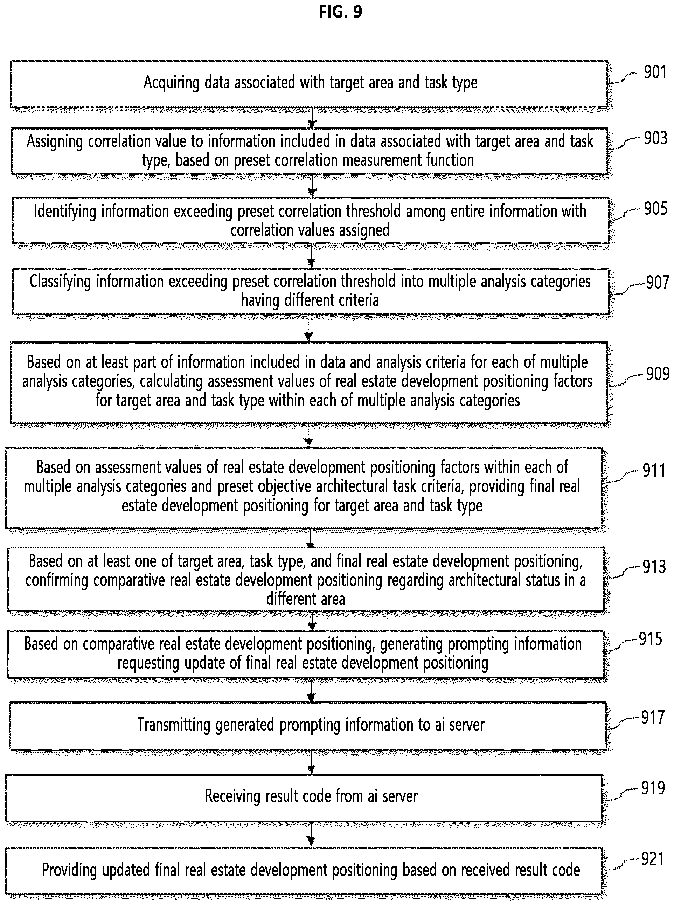

FIG. 9 is a diagram illustrating a flowchart on how an electronic device 100 provides real estate development positioning using Al technology according to various embodiments of the present disclosure. According to various embodiments, operations described in FIG. 9 may be performed differently from the specified sequence unless explicitly stated otherwise in the context That is, the operations may be performed in the specified sequence, may practically be performed simultaneously, or may be performed in the opposite sequence.

Since operations 901, 903, 905, 907, and 911 are substantially identical to operations 701, 703, 705, 707, and 711 in FIG. 7, respectively, detailed descriptions thereof are omitted.

In operation 913, the electronic device 100 may confirm comparative real estate development positioning regarding an architectural status of a different area based on at least one of a target area, a task type, and a final real estate development positioning. In operation 915, based on the comparative real estate development positioning, the electronic device 100 may generate prompting information to request an update of the final real estate development positioning. In operation 917, the electronic device 100 may transmit the generated prompting information to an Al server 200. In operation 919, the electronic device 100 may receive a result code from the Al server 200. In operation 921, the electronic device 100 may provide updated final positioning based on the received result code.

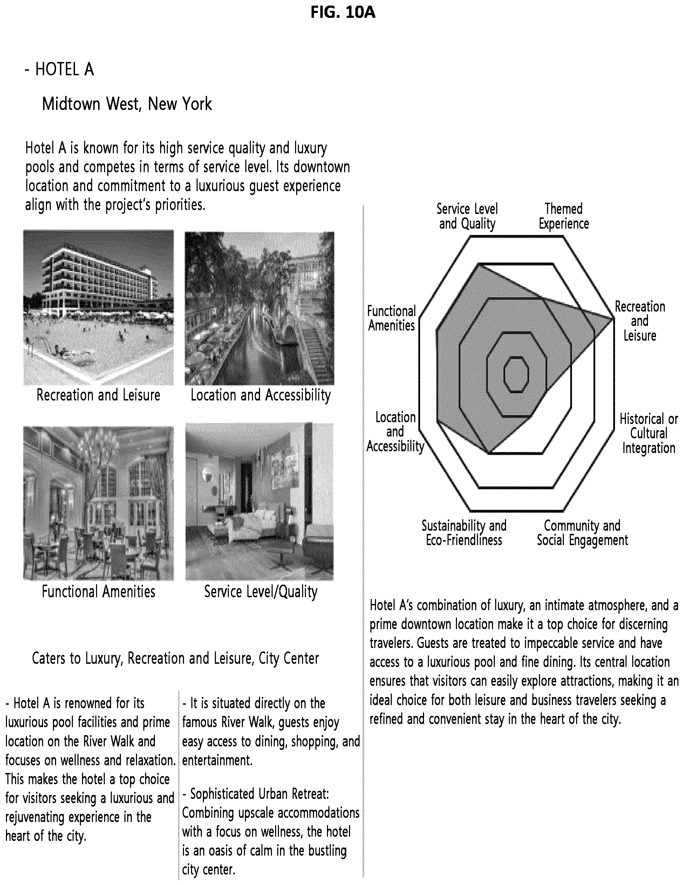

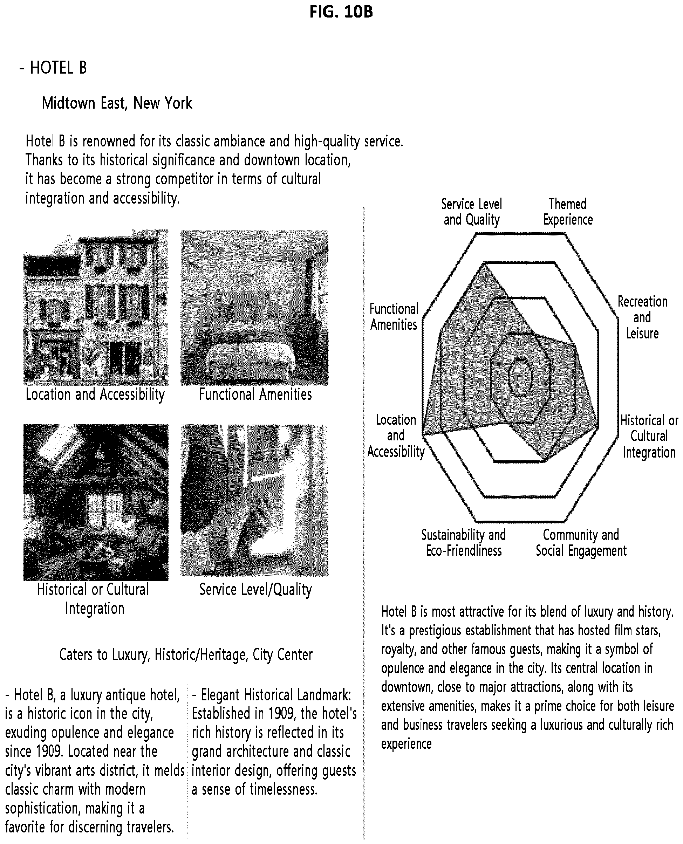

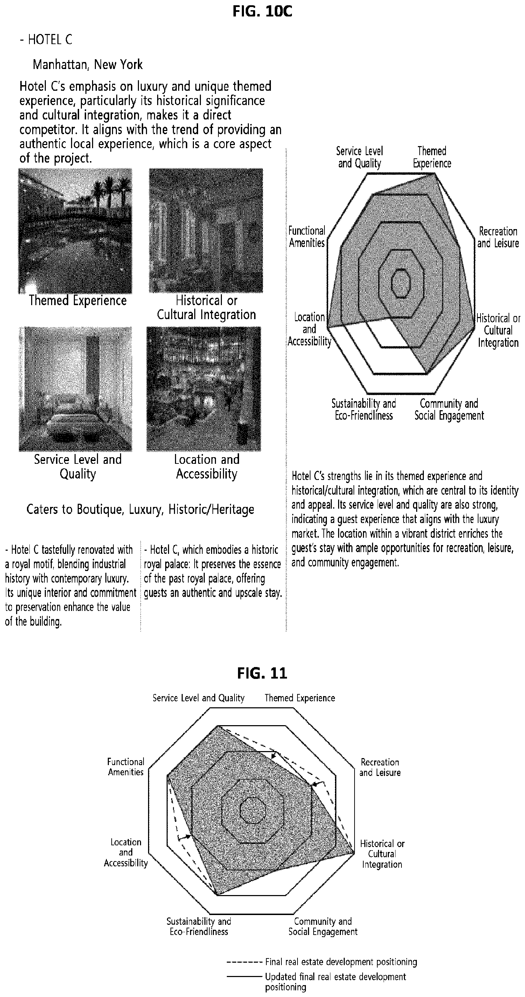

FIGS. 10A to 10C are diagrams illustrating an example of comparative real estate development positioning by an electronic device according to an embodiment of the present disclosure.

According to various embodiments, an electronic device 100 may confirm comparative real estate development positioning regarding an architectural status of a different area based on at least one of a target area, a task type, and a final real estate development positioning.

For example, to explain an example in which the electronic device 100 of the present disclosure provides an architectural position, it may be assumed that a target area for real estate development positioning is "a site with a specific location" and the task type is "hotel renovation." In the above example, the architectural status of the different area targeted for comparative real estate development positioning may be a different hotel adjacent to the target area.

Referring to FIGS. 10A to 10C, there may be different hotels located in the target area. In one embodiment, the electronic device 100 may calculate assessment values of real estate development positioning factors regarding each individual hotel located adjacent to the target area. In another embodiment, the electronic device 100 may, using Al technology, determine an architectural status of a different area targeted for comparative real estate development positioning based on assessment values for final real estate development positioning. In yet another embodiment, the electronic device 100 may analyze and assess the location and unique characteristics of each hotel located adjacent to the target area.

FIG. 11 is a diagram illustrating an example in which an electronic device provides real estate development positioning using Al technology according to an embodiment of the present disclosure.

According to various embodiments, an electronic device 100 may determine a difference between the assessment values for final real estate development positioning and assessment values of updated final real estate development positioning. The electronic device 100 may generate at least one of text data and image data regarding the determined difference. For example, the electronic device 100 may provide a graphical user interface, which displays the assessment values of the final real estate development positioning and the assessment values of the updated final real estate development positioning. In one embodiment, when the electronic device 100 includes a display module, the graphical user interface may be provided on one area of the screen of the electronic device 100. In another embodiment, the electronic device 100 may transmit the corresponding graphical user interface to an external link server.

For example, the electronic device 100 may compare and make adjustments to the assessment values for final real estate development positioning, which are provided based on data (e.g., qualitative data and quantitative data), compared to the assessment values for real estate development positioning regarding any competing hotel. In the above example, if there is a real estate development positioning factor not provided by any competing hotel, the electronic device 100 may also reduce a corresponding assessment value in final real estate development positioning. In another example, if there is a real estate development positioning factor provided by any competing hotel, the electronic device 100 may also increase a corresponding assessment value in final real estate development positioning.

In yet another example, the electronic device 100 may, using Al technology, generate prompting information to request adjustment of an assessment value for final real estate development positioning compared to an assessment value for comparative real estate development positioning. The electronic device 100 may transmit the generated prompting information to the Al server 200. The electronic device 100 may update the assessment values for final real estate development positioning based on received result code.

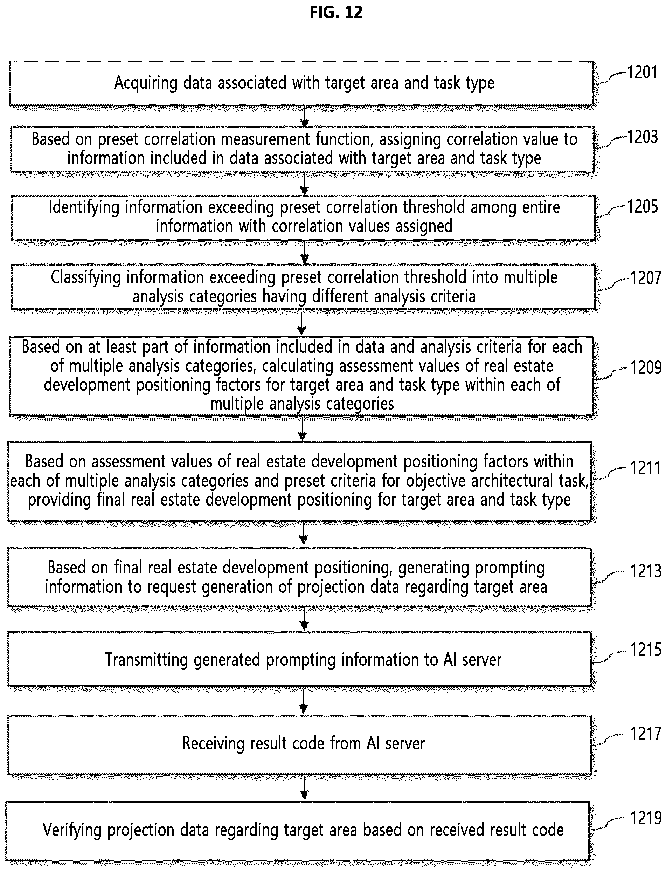

FIG. 12 is a flowchart showing how an electronic device 100 provides real estate development positioning using Al technology according to various embodiments of the present disclosure. According to various embodiments, operations in FIG. 12 may be performed differently from the specified sequence unless explicitly stated otherwise in the context. That is, the operations may be performed in the specified sequence, may practically be performed simultaneously, or may be performed in the opposite sequence.

Since operations 1201, 1203, 1205, 1207, and 1211 are substantially identical to operations 701, 703, 705, 707, and 711 of FIG. 7, detailed descriptions thereof are omitted.

In operation 1213, based on final real estate development positioning, the electronic device 100 may generate prompting information to request generation of projection data (e.g., Pro Forma, which is a projection document for future state or strategy) on a target area. In operation 1215, the electronic device 100 may transmit the generated prompting information to an Al server 200. In operation 1217, the electronic device 100 may receive a result code from the Al server 200. In operation 1219, the electronic device 100 may identify projection data regarding a target area based on the result code received from the Al server 200.

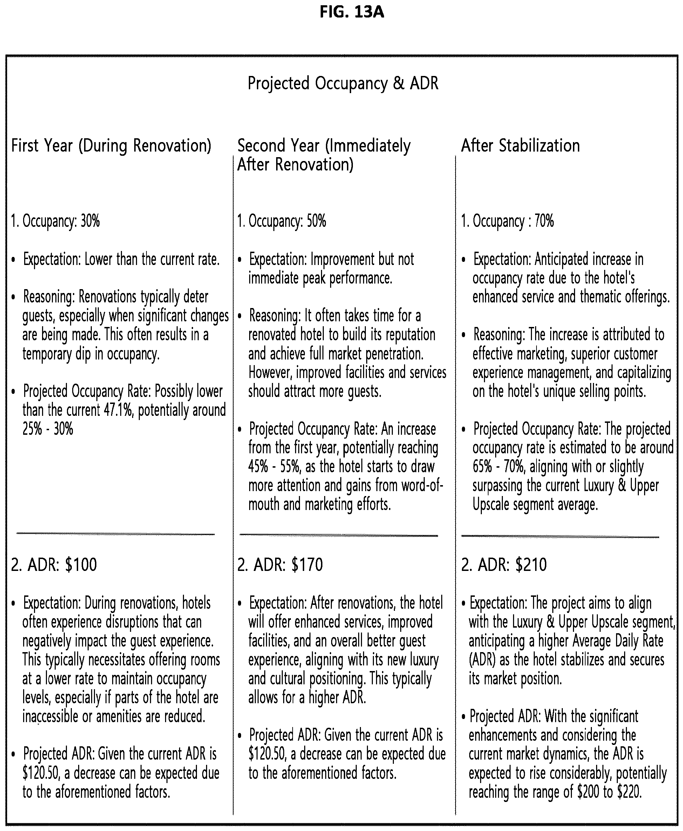

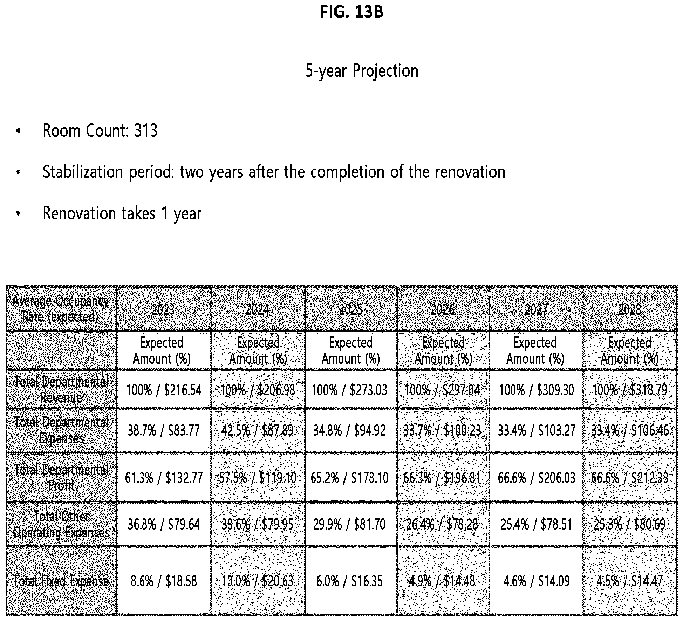

FIGS. 13A and 13B are diagrams illustrating an example in which an electronic device calculates projection data using Al technology according to an embodiment of the present disclosure.

According to various embodiments of the present disclosure, an electronic device 100 may generate prompting information to request the generation of projection data regarding a target area, based on final real estate development positioning. The electronic device 100 may transmit the generated prompting information to an Al server 200. The electronic device 100 may receive a result code from the Al server 200. The electronic device 100 may verify the projection data regarding the target area based on the result code received from the Al server 200.

For example, if the task type is "hotel renovation," the projection data may include data related to occupancy rate, Average Daily Rate (ADR), total departmental revenue, total departmental expenses, total departmental profit, total operating expenses, total fixed expenses, etc.

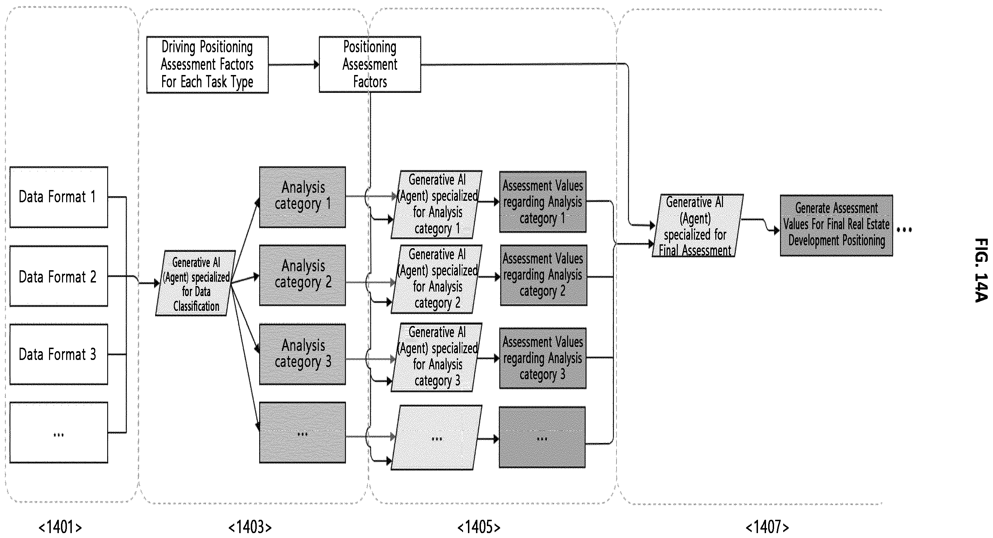

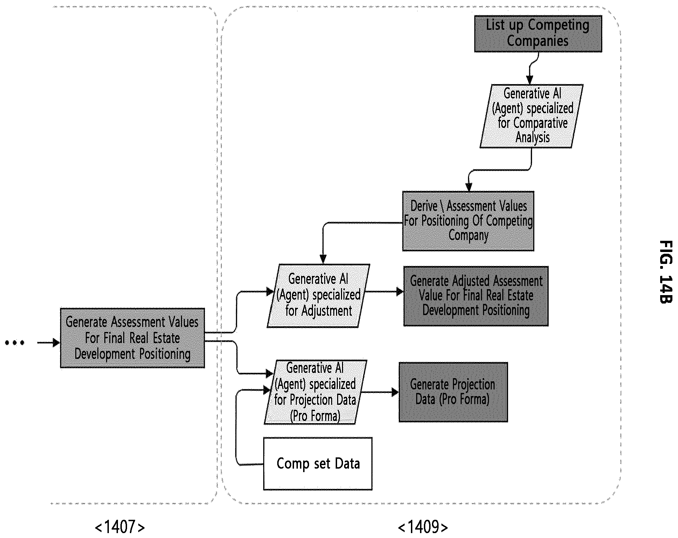

FIGS. 14A and 14B are diagrams illustrating an overall flowchart of how to provide real estate development positioning according to an embodiment of the present disclosure.

Referring to reference numeral 1401 of FIG. 14A, an electronic device 100 may acquire data associated with a target area and task type. Here, the data associated with the target area and task type may be any of various types of qualitative and quantitative data associated with the target area and task type.

Referring to reference numeral 1403 of FIG. 14A, the electronic device 100 may, through an Al server that is a generative Al specialized for data classification, classify the data associated with the task area and task type into multiple analysis categories (e.g., Macro Industry Trend, Micro Industry Trend, etc.) having different analysis criteria.

Here, the Al server 200, which is a generative Al specialized for data classification, is described as a single Al server for the sake of convenience in the description. However, the Al server 200 may be composed of multiple Al servers supporting different Al technologies. For example, the Al server 200 may include a classification scraping agent supporting web scraping and data classification technologies, a PDF agent for extracting and classifying text or other data from PDF documents, an Excel agent for extracting and classifying data from Excel files, an image agent for recognizing and classifying information from image files, a validity agent for evaluating the validity and reliability of data, and so on.

Referring to reference numeral 1405 of FIG. 14A, the electronic device 100 may, through expert Al servers 200 for multiple analysis categories, may calculate assessment values of respective real estate development positioning factors based on data classified into the multiple analysis categories. Here, the Al server 200 is described as a single Al server for convenience of explanation. However, the Al server 200 may be an Al server that calculates assessment value of the real estate development positioning factors within each individual category (e.g., Macro Industry Trend, Micro Industry Trend, Demographic Trend, etc.).

Referring to reference numeral 1407 of FIGS. 14A and 14B, the electronic device 100 may, through an Al server 200 that is a generative Al specialized for final assessment, provide a final real estate development positioning assessment value regarding the task type based on the assessment values of the real estate development positioning factors within each of the multiple analysis categories and preset criteria for an objective task.

Referring to reference numeral 1409 of FIG. 14A, the electronic device 100 may, through an Al server 200 that is a generative Al specialized for comparative analysis, calculate an assessment value for positioning of a competing company based on analysis of real estate development positioning of the competing company. The electronic device 100 may, through an Al server 200 that is a generative Al specialized for adjustment, adjust the assessment values for final real estate development positioning by performing analysis and comparison on the assessment values for positioning of the competing company. For example, the electronic device 100 may provide updated final positioning, which is adjusted final real estate development positioning. The electronic device 100 may provide projection data (e.g., Pro Forma) based on various comparison data through an Al server 200 that is a generative Al specialized for projection data (e.g., Pro Forma).

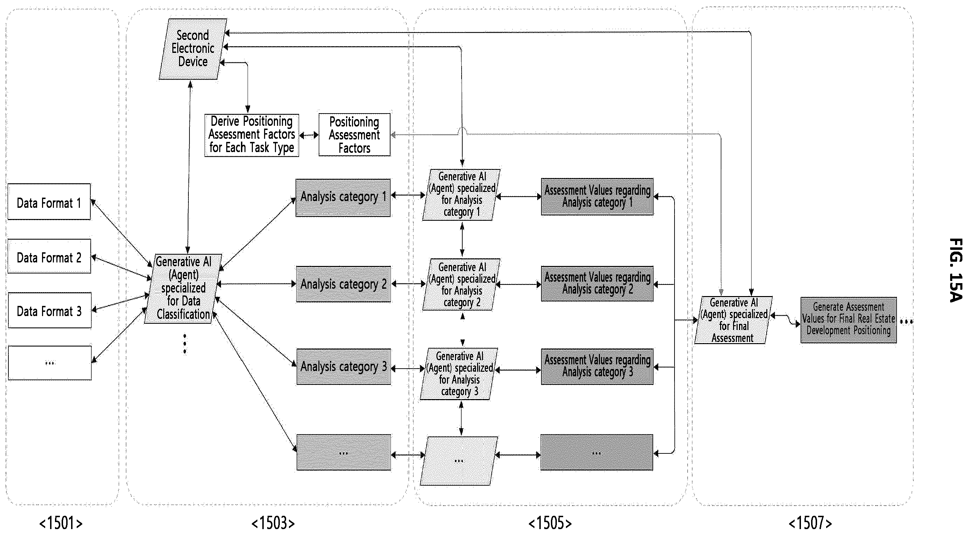

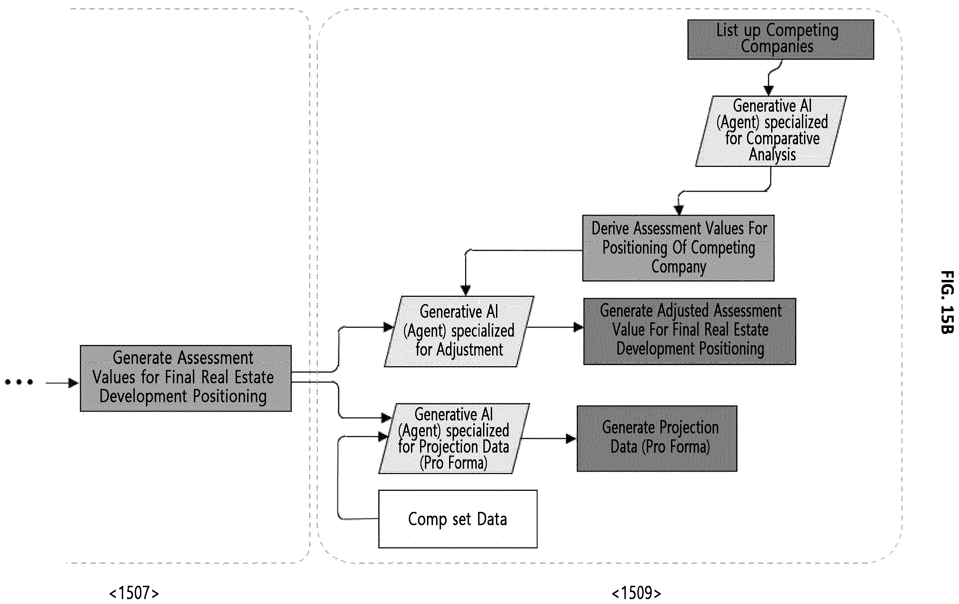

FIGS. 15a and 15b are diagrams illustrating an overall flowchart of how to provide real estate development positioning according to an embodiment of the present disclosure.

Referring to reference numeral 1501 of FIG. 15A, an electronic device 100 may acquire data associated with a target area and task type. Here, the data associated with the target area and task type may be any of various types of qualitative and quantitative data associated with the target area and task type.

Referring to reference numeral 1503 of FIG. 15, an Al server 200, which is a generative Al specialized for data classification, may classify data associated with a target area and task type through data transmission and reception with the electronic device 100 and/or a second electronic device into multiple analysis categories having different analysis criteria (e.g., Macro Industry Trend, Micro Industry Trend, etc.) associated with the target area and task type.

Here, the Al server 200, which is a generative Al specialized for data classification, is described as a single Al server for the sake of convenience in the description. However, the Al server 200 may be composed of multiple Al servers supporting different Al technologies. For example, the Al server 200 may include a classification scraping agent supporting web scraping and data classification technologies, a PDF agent for extracting and classifying text or other data from PDF documents, an Excel agent for extracting and classifying data from Excel files, an image agent for recognizing and classifying information from image files, a validity agent for evaluating the validity and reliability of data, and so on.

Here, the second electronic device may be a server of a company operating and/or managing the electronic device 100, the server, and/or the Al server 200, or may be an Al server providing Al technology, or may be a server supporting Al technology.

In one embodiment, the second electronic device may be composed of a plurality of devices providing different functions and may be operated through a network between the plurality of devices. For example, one device among the plurality of devices may be an electronic device of a third party (e.g., customer company device, external device, etc.), and another device may be a server of a company operating and managing the electronic device 100, server, and/or Al server 200. In another example, the second electronic device may receive a relevant instruction (e.g., a user input, feedback, etc.) from an external device (e.g., a client device, an external device, etc.) to generate real estate development positioning factors and may perform a function corresponding to the relevant instruction.

Referring to reference numeral 1505 of FIG. 15A, the Al server 200, which is a generative Al specialized for each individual category in multiple analysis categories, may calculate assessment values of real estate development positioning factors for a task type within each of the multiple analysis category through data transmission and reception with the electronic device 100 and/or the second electronic device, based on the data classified into the multiple analysis categories.

In one embodiment, the second electronic device may receive requirements from an external device (e.g., a client device), such as financial feasibility, public benefit, or a combination thereof (e.g., 50% financial feasibility and 50% public benefit) and determine task criteria corresponding to the requirements. The electronic device 100 and/or the second electronic device may transmit preset task criteria to the generative Als specialized for the respective multiple analysis categories. The electronic device 100 and/or the second electronic device may transmit, receive, and analyze data with each of the generative Als specialized for the respective multiple analysis categories to derive a result.

Here, the Al server 200 is described as a single Al server for convenience of explanation. However, the Al server 200 may be an Al server that calculates assessment value of the real estate development positioning factors within each individual category (e.g., Macro Industry Trend, Micro Industry Trend, Demographic Trend, etc.).

Referring to reference numeral 1507 of FIGS. 15A and 15B, the electronic device 100, the second electronic device, and/or the Al server 200 corresponding to a generative Al specialized for final assessment may adjust the weights of the generative Als specialized for the respective multiple analysis categories and derive results more in line with the predefined task criteria through one or more feedback loops. For example, when the electronic device 100 and/or the second electronic device receive(s) instructions for additional queries or requirements, the electronic device 100 and/or the second electronic device may provide relevant functionalities in response to the received queries or requirements. Here, the queries or requirements may include an input value selected by the user of the electronic device 100 and/or the second electronic device, an input value from an external electronic device, etc.

Referring to reference numeral 1509 of FIG. 15B, the electronic device 100 may, through an Al server 200 that is a generative Al specialized for comparative analysis, calculate assessment values for real estate development positioning of a competing company based on analysis of positioning of the competing company. The electronic device 100 may, through an Al server 200 that is a generative Al specialized for adjustment, adjust the assessment values for final real estate development positioning by performing analysis and comparison on the assessment values for positioning of the competing company. For example, the electronic device 100 may provide updated final positioning, which is adjusted final real estate development positioning. The electronic device 100 may provide projection data (e.g., Pro Forma) based on various comparison data through an Al server 200 that is a generative Al specialized for projection data (e.g., Pro Forma).

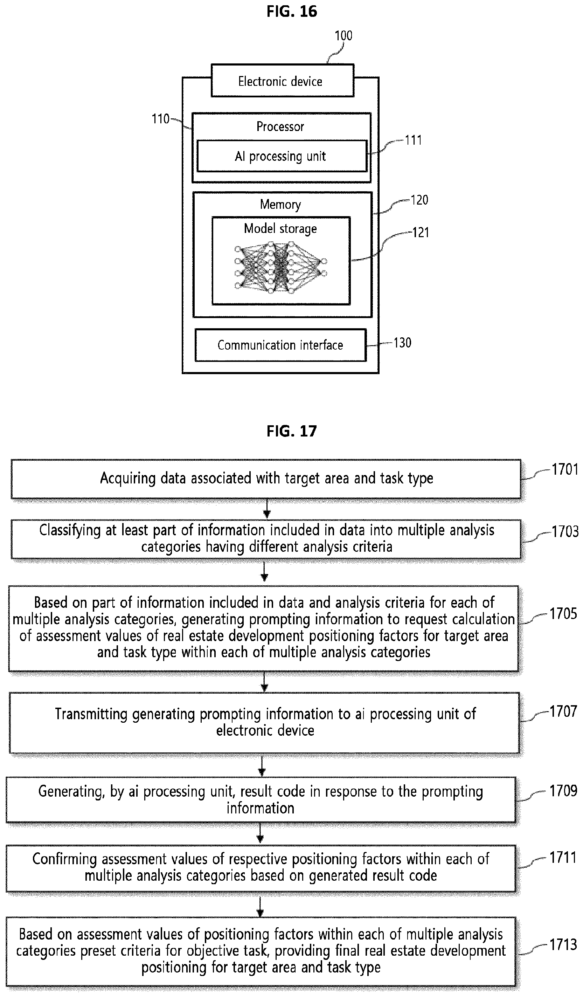

FIG. 16 is a diagram illustrating an example of an electronic device 100 providing positioning according to another embodiment of the present disclosure.

According to various embodiments, the electronic device 100 may be connected to other electronic devices (e.g., an external server, etc.) through a network. Communication schemes for a network is not limited. The communication schemes may include not only a communication scheme to utilize a telecommunication network (for example, a mobile communication network, wired Internet, wireless Internet, and a broadcast network), but also a short-range radio communication scheme.

According to various embodiments, the electronic device 100 may perform at least some functionalities performed by the Al server 200 of FIG. 1.

In one embodiment, the processor 110 of the electronic device 100 may include an Al processing unit 111. Since the Al processing unit 111 of the electronic device 100 performs or substantially corresponds to at least some functionalities of the processor 210 and/or the learning processor 220 of the Al server 200, a detailed description thereof is omitted. For example, the Al processing unit 111 of the electronic device 100 may train an artificial neural network using training data, which is one of the functionalities performed by the learning processor 220. Here, a trained model may be provided in the electronic device 100 of the artificial neural network, or may be provided in an external device.

In one embodiment, a memory 120 of the electronic device 100 may include a model storage 121. Since the memory 120 of the electronic device 100 substantially corresponds to at least a portion of the memory 240 of the Al server 200 and the model storage 121 substantially corresponds to at least a portion of a model storage of the Al server 200, detailed descriptions of the memory 120 and model storage 121 are omitted. For example, the memory 120 may store a model being learned or a learned model (or human neural network) in the memory 120 similarly to a functionality performed by the memory 240 of the Al server 200.

FIG. 17 is a diagram illustrating an example in which an electronic device 100 provides real estate development positioning using Al technology according to an embodiment of the present disclosure. According to various embodiments, operations of FIG. 17 may be performed differently from the specified sequence unless explicitly stated otherwise in the context. That is, the operations may be performed in the specified sequence, may practically be performed simultaneously, or may be performed in the opposite sequence.

Since operations 1701 and 1703 are substantially identical to operation 201 and 203 of FIG. 2, detailed descriptions thereof are omitted.

In operation 1705, the electronic device 100 may generate prompting information to request the calculation of assessment values for real estate development positioning factors for a target area and task type within each of multiple analysis categories, based on the at least part of information included in the data and criteria for each analysis category. In operation 1707, the electronic device 100 may transmit the generated prompting information to an Al processing unit 111 of the electronic device 100. In operation 1709, the Al processing unit 111 of the electronic device 100 may generate a result code in response to the prompting information. In operation 1711, the electronic device 100 may check the assessment values of the real estate development positioning factors within each of the multiple analysis categories based on the generated a result code. In operation 1713, the electronic device 100 may provide final real estate development positioning for the target area and task type, based on the assessment values of the respective real estate development positioning factors and preset criteria for an objective task.

According to various embodiments, the electronic device 100 may verify comparative real estate development positioning regarding an architectural status of a different area based on at least one of a target area, a task type, and a final real estate development positioning. The electronic device 100 may generate prompting information to request an update of the final real estate development positioning, based on the comparative real estate development positioning. The electronic device 100 may transmit the generated prompting information to the Al processing unit 111 of the electronic device. The Al processing unit 111 of the electronic device 100 may generate a result code in response to the prompting information. The electronic device 100 may provide updated final positioning based on the generated a result code.

The present disclosure may provide various technical effects and innovations. According to an embodiment of the present disclosure, it is possible to achieve optimized urban planning, building architectural design direction, and hospitality goals by generating real estate development positioning by using Al technology with various quantitative and qualitative data regarding the target area. In addition, the present disclosure may provide real estate development positioning using Al technology, thereby diversifying and enriching a process of training Al models. In doing so, it is possible to enhance the versatility and adaptability of Al models and improve the performance of the Al models to achieve more accurate results.

According to an embodiment of the present disclosure, it is possible to identify issues and improvements in the current architectural status by comparing and analyzing the positioning of the current architectural status and real estate development positioning based on various quantitative and qualitative data regarding the target area.

According to an embodiment of the present disclosure, it is possible to adjust the provided real estate development positioning to be more optimized, by comparing and analyzing comparative real estate development positioning for a different area's architectural status and real estate development positioning based on various quantitative and qualitative data regarding the target area. This enables achieving more optimized urban planning, building architectural design directions, and hospitality goals.

At least part of the devices (e.g., modules or functions thereof) or methods (e.g., operations) according to various embodiments may be implemented with instructions as programming modules that are stored in computer-readable storage media. In one embodiment, an instruction, when executed by a processor (e.g., the processor 110, the processor 210, etc.), may cause one or more processors to perform functions corresponding to the instruction. The computer-readable storage medium may be, for example, a memory (e.g., the memory 120 or memory 240).

According to various embodiments, the computer-readable recording medium may include a computer program stored on the medium to execute the method according to any one of claims in combination with hardware. For example, the computer-readable recording medium may include various storage devices such as a hard disk, a floppy disk, magnetic media (e.g., magnetic tape), optical media (e.g., CD-ROM, DVD, magneto-optical media (e.g., floppy disk)), hardware devices (e.g., ROM, RAM, flash memory), and the like.

In addition, examples of program instructions may include machine code instructions created by assembly languages, such as a compiler, and code instructions created by a high-level programming language executable in computers using an interpreter, etc. The described hardware devices may be configured to act as one or more software modules in order to perform the operations and methods described above, or vice versa.

The technical features disclosed in each embodiment of the present disclosure are not limited to a corresponding embodiment, and unless incompatible with each other, the technical features disclosed in each embodiment may be applied in combination to other embodiments. It will be further understood by those within the art that any disjunctive word and/or phrase presenting two or more alternative terms, whether in the description, claims, or drawings, can be understood to contemplate the possibilities of including one of the terms, either of the terms, or both terms. For example, the phrase "A or B" will be understood to include the possibilities of "A" or "B" or "A and B." Further, the term "each," as used herein, in addition to having its ordinary meaning, can mean any subset of a set of elements to which the term "each" is applied. Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z. The technical features disclosed in each embodiment of the present disclosure are not limited to a corresponding embodiment, and unless incompatible with each other, the technical features disclosed in each embodiment may be applied in combination to other embodiments.

Therefore, although each embodiment is described mainly about an individual technical feature, the technical features of the embodiments of the present disclosure may be applied in combination, unless incompatible with each other.

The present disclosure is not limited to the above-described embodiments and the accompanying drawings, and various modifications and changes may be made in view of a person skilled in the art to which the present disclosure pertains. Therefore, the scope of the present disclosure should be determined by the scope of the appended claims and equivalents thereof.

## Claims

1. A method performed by an electronic device, the method comprising:
acquiring data associated with a target area and a task type;
classifying at least part of information included in the data into multiple analysis categories having different analysis criteria;
based on the at least part of information included in the data and analysis criteria for each of the multiple analysis categories, calculating assessment values of real estate development positioning factors for the target area and the task type within each of the multiple analysis categories; and
based on the assessment values of the real estate development positioning factors within each of the multiple analysis categories and preset criteria for an objective architectural task, providing final real estate development positioning for the target area and the task type.

2. The method of claim 1, wherein the data associated with the target area and the task type comprises:
quantitative data comprising at least one of population density data, economic indicators data, traffic statistics data, architectural infrastructure data, and environmental data regarding the target area and the task type; and
qualitative data comprising at least one of SNS data, local community feedback data, cultural value data, and quality-of-life data associated with the target area and the task type.

3. The method of claim 1, wherein the classifying comprises:
assigning correlation values to information included in the data associated with the target area and the task type based on a preset correlation measurement function;
identifying a piece of information exceeding a preset correlation threshold among the information with the correlation values assigned; and
classifying a piece of information exceeding the preset correlation threshold into the multiple analysis categories having the different analysis criteria.

4. The method of claim 3, wherein the assigning comprises:
generating prompting information to request assessment of correlation between the information included in the data associated with the target area and the task type;
transmitting the generated prompting information to an artificial intelligence (Al) server;
receiving a result code from the Al server; and
assigning a correlation value to each piece of the information included in the data, based on the received result code.

5. The method of claim 1, wherein the multiple analysis categories comprise at least two of the following: Macro Industry Trend, Micro Industry Trend, Demographic Trend, Development Pattern, Transportation, Safety and Security, Local Business Ecosystem, History & Culture, and Urbanistic Quality.

6. The method of claim 1, wherein the calculating of the assessment values comprises:
identifying topics included in each of the multiple analysis categories;
generating prompting information to generate the assessment values of the real estate development positioning factors according to each of the identified topic, based on at least part of the information included in the data;
transmitting the generated prompting information to an artificial intelligence (Al) server;
receiving a result code from the Al server; and
based on the received result code, calculating an assessment value of each of the real estate development positioning factors regarding the target area and the task type within each of the multiple analysis categories.

7. The method of claim 1, wherein the real estate development positioning factors comprise at least one of the following: Service Level and Quality, Themed Experience, Recreation and Leisure, History & Culture, Community and Social Engagement, Eco-Friendliness, Location and Accessibility, and Functional Amenities.

8. The method of claim 1, further comprising:
calculating assessment values for real estate development positioning regarding a current status of the target area;
determining a difference between the assessment values for real estate development positioning regarding the current status and assessment values for final real estate development positioning; and
generating at least one of text data and image data associated with the determined difference.

9. The method of claim 1, further comprising:
based on at least one of the target area, the task type, and the final real estate development positioning, identifying comparative real estate development positioning regarding an architectural status of a different area;
based on the comparative real estate development positioning, generating prompting information to request an update of the final real estate development positioning;
transmitting the generated prompting information to an artificial intelligence (AI) server;
receiving a result code from the Al server; and
providing updated final positioning based on the received result code.

10. The method of claim 1, further comprising:
based on the final real estate development positioning, generating prompting information to request generation of projection data regarding the target area;
transmitting the generated prompting information to an artificial intelligence (AI) server;
receiving a result code from the Al server; and
verifying projection data of the target area based on the received result code.

11. An electronic device comprising:
a memory storing instructions, and
a processor configured to execute the instructions to:
acquire data associated with a target area and a task type;
classify at least part of information included in the data into multiple analysis categories having different analysis criteria;
based on the at least part of information included in the data and analysis criteria for each of the multiple analysis categories, calculate assessment values of real estate development positioning factors for the target area and the task type within each of the multiple analysis categories; and
based on the assessment values of the real estate development positioning factors within each of the multiple analysis categories and preset criteria for an objective architectural task, provide final real estate development positioning for the target area and the task type.

12. The electronic device of claim 11, wherein when calculating the assessment values of the real estate development positioning factors for the target area and the task type within each of the multiple analysis categories, the processor is further configured to:
identify topics included in each of the multiple analysis categories;
generate prompting information to generate the assessment values of the real estate development positioning factors according to each of the identified topic, based on at least part of the information included in the data;
transmit the generated prompting information to an artificial intelligence (AI) server;
receive a result code from the Al server; and
based on the received result code, calculate an assessment value of each of the real estate development positioning factors regarding the target area and the task type within each of the multiple analysis categories.

13. The electronic device of claim 11, wherein the processor is further configured to:
calculate assessment values for real estate development positioning regarding a current status of the target area;
determine a difference between the assessment values for real estate development positioning regarding the current status and assessment values for final real estate development positioning; and
generate at least one of text data and image data associated with the determined difference.

14. The electronic device of claim 11, wherein the processor is further configured to:
based on at least one of the target area, the task type, and the final real estate development positioning, identify comparative real estate development positioning regarding an architectural status of a different area;
based on the comparative real estate development positioning, generate prompting information to request an update of the final real estate development positioning;
transmit the generated prompting information to an artificial intelligence (AI) server;
receive a result code from the Al server; and
provide updated final positioning based on the received result code.

15. The electronic device of claim 11, wherein the processor is further configured to:
based on the final real estate development positioning, generate prompting information to request generation of projection data regarding the target area;
transmit the generated prompting information to an artificial intelligence (AI) server;
receive a result code from the Al server; and
verify projection data of the target area based on the received result code.
